# EUROPÄISCHE PATENTSCHRIFT

(11) **EP 2 222 465 B1**
(45) Veröffentlichungstag und Bekanntmachung des Hinweises auf die Patenterteilung: **08.06.2016**
(21) Anmeldenummer: 08859707.5
(22) Anmeldetag: 23.10.2008
(51) Int. Cl.: B32B 33/00, B32B 38/06, B32B 37/12

(54) **DAMPFDURCHLÄSSIGES LAMINAT**
VAPOUR-PERMEABLE LAMINATE
STRATIFIÉ PERMÉABLE À LA VAPEUR

(30) Priorität: 12.12.2007 DE 102007060358
(43) Veröffentlichungstag der Anmeldung: 01.09.2010
(73) Patentinhaber: EWALD DÖRKEN AG, 58313 Herdecke (DE)
(72) Erfinder: SCHRÖER, Jörn, 58313 Herdecke (DE); KOSTREWA, Stefan, 58730 Fröndenberg (DE)
(74) Vertreter: Von Rohr Patentanwälte Partnerschaft mbB
(86) Internationale Anmeldenummer: PCT/EP2008/008962
(87) Internationale Veröffentlichungsnummer: WO 2009/074191

(56) Entgegenhaltungen:
- WO-A-01/15898
- WO-A-2006/072604
- FR-A- 2 871 822
- US-A- 6 114 024

## Beschreibung

Die Erfindung betrifft die Verwendung eines dampfdurchlässigen Laminats im Baubereich, mit wenigstens einer ersten Deckschicht und wenigstens einer zweiten Deckschicht, wobei die Deckschichten Perforationen aufweisen und derart miteinander verbunden sind, dass sich die Perforationen der ersten Deckschicht nicht mit den Perforationen der zweiten Deckschicht überdecken, und wobei zwischen den Deckschichten eine Poren aufweisende Struktur vorgesehen ist.

Bei dampfdurchlässigen Laminaten der vorgenannten Art handelt es sich um mikroporöse Bahnen oder Folien, die durch ihren feinporigen Aufbau derart strukturiert sind, daß Dampfmoleküle durch sie kontrolliert hindurchdringen bzw. -diffundieren können. Derartige Laminate, die auch als diffusionsoffene Membranen bezeichnet werden, sollen im Baubereich eine atmungsaktive Wand- oder Dachkonstruktion gewährleisten. Überschüssige Feuchtigkeit in der Luft eines Raumes soll kontrolliert durch die Konstruktion ausdiffundieren können, um Probleme wie Feuchtigkeitsschäden im Bereich der im Wand- oder Dachaufbau befindlichen Dämmschichten zu verhindern. Gleichzeitig soll eine hinreichende Dichtigkeit gewährleistet sein. Nachteilig bei den aus der Praxis bekannten Laminaten der eingangs genannten Art ist, daß die mechanischen Eigenschaften und die Haltbarkeit dieser Produkte begrenzt sind.

Aus der WO 2006/072604 A2 ist bereits ein Laminat der eingangs genannten Art bekannt. Bei diesem Laminat sind zwei mikrostrukturierte und perforierte Folien derart miteinander verbunden, daß die strukturierten Seiten der Einzelfolien einander gegenüberliegen und die Strukturen dabei über Kreuz verlaufen. Die Perforationslöcher in den einzelnen Folienebenen dürfen beim Laminieren nicht in Deckung miteinander liegen, da sonst ein direkter Durchtritt von Flüssigkeit durch das Laminat möglich und der Verbund damit undicht ist. Grundsätzlich soll dabei der Abstand der Perforationen in beiden Ebenen so groß sein, daß der Diffusionsweg für den Gasdurchtritt nicht zu groß ist, aber genügend Sperrstellen zwischen den beiden Perforationen liegen, um einen Feuchtigkeitsdurchtritt wirkungsvoll zu verhindern. Bei diesem bekannten Laminat ist dazu vorgesehen, daß der Abstand zwischen der ersten und der zweiten Deckschicht und damit die Kanalhöhe kleiner als 200 µm sein soll. Zur Erzielung einer Dichtigkeit bei einer statischen Wassersäule von 100 cm muß der Abstand zwischen den beiden Deckschichten und damit die Kanalhöhe 50 µm betragen. Ist eine geringere Dichtigkeit erforderlich, kann dementsprechend ein größerer Abstand zwischen den Deckschichten realisiert werden. Aus den einzelnen Figuren der WO 2006/072604 A2 ergibt sich, daß die Kanäle im besten Fall eine Breite haben, die doppelt so groß ist wie die Kanalhöhe. In der Regel ist die Kanalbreite um ein Vielfaches größer als die Kanalhöhe.

Da die aus der WO 2006/072604 A2 beschriebene Bahn in der Praxis nicht existiert, hat die Anmelderin mit erheblichem Aufwand versuchsweise Muster derartiger Bahnen erstellt. Die Erstellung derartiger Muster war vor allem deshalb mit hohem Aufwand verbunden, da es Bahnen mit derartigen Mikrostrukturen bisher nicht gab. Problematisch war im übrigen auch die Laminierung derartiger Bahnen in einer Weise, daß durch das Laminieren nicht die Kanalstruktur in Mitleidenschaft gezogen wird, so daß dadurch die Mikroporosität und daraus resultierend die Dampfdurchlässigkeit leidet. Nach Erstellung von Mustern sind von der Anmelderin Versuche zur Prüfung der Dichtigkeit und der Dampfdurchlässigkeit durchgeführt worden. Dabei ist festgestellt worden, daß die nach der WO 2006/072604 A2 hergestellten Laminate zwar hinreichend dampfdurchlässig sind, jedoch schon bei geringen statischen Wassersäulen von kleiner 20 cm einen Flüssigkeitsdurchtritt und damit eine Undichtigkeit zeigen.

Der vorliegenden Erfindung lag daher die Aufgabe zugrunde, ein dampfdurchlässiges Laminat der eingangs genannten Art zur Verwendung im Baubereich bereitzustellen, das einerseits eine hinreichende Dichtigkeit gegen Flüssigkeitsdurchtritt gewährleistet, andererseits jedoch eine ausreichende Dampfdurchlässigkeit bietet.

Diese Aufgabe ist erfindungsgemäß im wesentlichen dadurch gelöst, daß die einzelnen Poren der Struktur jeweils eine lichte Querschnittsfläche von kleiner 100 µm² aufweisen.

Grundgedanke der vorliegenden Erfindung ist es, die poröse Struktur einer diffusionsoffenen Laminatkonstruktion in die Mittelebene zwischen zwei Deckschichten zu verlegen. Die poröse Struktur bildet dabei die Funktionsebene. Die Deckschichten verfügen über Perforationen bzw. Öffnungen, deren Dimensionen groß bis sehr groß gegenüber den Dimensionen der Poren der Funktionsebene sind. Die Perforationen der Deckschichten sind versetzt angeordnet, so daß Feuchtigkeit nicht direkt durch den Schichtaufbau hindurchtreten kann. Die Funktion der Deckschichten ist es vorrangig, die mechanische Stabilität und Robustheit des Laminats zu verbessern. Desweiteren haben die Deckschichten in der Regel eine absorbierende oder abweisende Wirkung gegenüber externen Einflüssen und schützen so die mittige Funktionsebene. Exemplarisch sei hier die UV-Strahlung oder die kinetische Energie von Regen- bzw. Wassertropfen genannt. Von Bedeutung ist es, daß die Funktionsebene bzw. die Struktur eine Porosität quer zum Schichtaufbau des Laminats, also in der Ebene des Laminats aufweist. Bei den Poren handelt es sich damit um sogenannte Horizontalporen.

Dabei ist die vorgenannte Querschnittsfläche der einzelnen Poren von kleiner 200 µm das Ergebnis äußerst aufwendiger Untersuchungen. Wie zuvor bereits ausgeführt worden ist, war es schon deshalb nicht ohne weiteres möglich, auf die nunmehr erfindungsgemäß gefundene Querschnittsfläche zu kommen, da in der Praxis keinerlei verfügbare Deckschichten bzw. Folien oder Filme mit derartigen Mikrostrukturen verfügbar sind. Diese mußten in Einzelfertigung erstellt und anschließend so laminiert werden, daß die Mikrostruktur auch nach dem Laminieren erhalten blieb. Darüber hinaus erschien unter Berücksichtigung der WO 2006/072604 A2 die Verwendung von Poren mit derart geringem Querschnitt schon deshalb nicht naheliegend, da zunächst befürchtet wurde, daß eine zu starke Verkleinerung des Porenquerschnitts zwar die Dichtigkeit des Laminats erhöhen, jedoch die Dampfdurchlässigkeit beeinträchtigen oder sogar zunichte machen würde. Überraschenderweise ist dann jedoch nach Durchführung einer Reihe von Versuchen mit Bahnen mit unterschiedlichen Poren-Querschnitten festgestellt worden, daß der nunmehr beanspruchte Querschnittsflächenbereich einer Pore einerseits eine hinreichende Dichtigkeit bietet und andererseits die Dampfdurchlässigkeit nicht einschränkt. Bei den durchgeführten Versuchen sind bei Querschnittsflächen von geringfügig weniger als 200 µm² Dichtigkeiten bei einer statischen Wassersäule von über 200 mm bei Dampfdurchlässigkeiten (gemäß EN 1931/EN 12572, 23°C, 70% relative Luftfeuchtigkeit) von mehr als 400 g/m²d ermittelt worden.

Bei den Versuchen, die die Anmelderin durchgeführt hat, ist weiterhin festgestellt worden, daß die einzelnen Poren jeweils eine lichte Querschnittsfläche insbesondere im Bereich zwischen 0,5 µm² und 50 µm² aufweisen sollten. Bei derart geringen Querschnittsflächen sind Dichtigkeiten bei einer statischen Wassersäule von mehr als 400 mm und insbesondere mehr als 600 mm gegeben. Die Wasserdampfdurchlässigkeit selbst bei den vorgenannten kleinen Porenquerschnitten liegt dann noch immer deutlich oberhalb von 100 g/m²d.

Bevorzugt ist es dabei so, daß die Struktur eine Porosität quer zum Schichtaufbau aufweisen sollte.

Bevorzugt ist es im übrigen, daß die durchschnittliche Öffnungsweite der Poren kleiner, vorzugsweise sehr viel kleiner als die Öffnungsweite der Perforation ist.

Grundsätzlich ist es möglich, die Struktur als Funktionsebene durch eine separate Schicht und/oder als Teil wenigstens einer Deckschicht auszubilden. Für die Struktur als Funktionsebene kommt insbesondere in Frage eine Schaumschicht oder eine poröse Folie zwischen den Deckschichten, eine an wenigstens einer Deckschicht ausgebildete Kanalstruktur, zwischen den Deckschichten befindliche Fasern, die vorgefertigt oder aufgesprüht werden können, oder aber eine Funktionsschicht aus strukturiertem Kleber.

Je nach Ausbildung der Funktionsebene hat die Struktur unterschiedliche Formen. Bei einer geschäumten Funktionsschicht haben die Poren der Struktur im wesentlichen eine elliptische, insbesondere kreisrunde Form. Gleiches
gilt bei einer porösen Folie. Eine poröse verstreckte Folie hat im wesentlichen elliptische Poren. Ist die Kanalstruktur an wenigstens einer Innenseite der einander zugewandten Deckschichten vorgesehen, sind die einzelnen Kanäle zwischen seitlichen Stegen, die die einzelnen Kanäle seitlich begrenzen, ausgebildet. Hierbei ergibt sich die lichte Querschnittsfläche dann durch die Fläche, die von der Kanalunterseite, den Stegseitenflächen und der gedachten Verbindungslinie zwischen den beiden Stegoberseiten eingeschlossen ist. Dabei können die Stegseitenflächen gradlinig, konkav oder konvex ausgebildet sein. Gleiches gilt im übrigen auch dann, wenn die Struktur und damit die Funktionsebene durch Fasern oder durch strukturierten Kleber gebildet wird. Die Verwendung einer geschäumten Funktionsebene bietet den wesentlichen Vorteil, daß die Deckschichten, die günstigerweise unstrukturiert sind, ausschließlich durch den Schaum miteinander verbunden werden können, wobei die einander zugewandten Innenseiten zur Haftungsverbesserung Corona-, Plasma-, oder Primer-vorbehandelt werden können. Der Vorteil hierbei ist, daß der Schaum letztlich den Kleber bildet, so daß sich ein im wesentlichen vollflächiger Kontakt zu den beiden Deckschichten ergibt. Im übrigen läßt sich die Größe der (Horizontal-)Poren des Schaums sehr gut über die Verfahrensparameter wie Schaumbildung und Temperatur sowie Druck beim Laminieren kontrollieren. In diesem Zusammenhang bietet es sich besonders an, wenn der Schaum durch Aufschäumen einer Emulsion oder einer Dispersion, insbesondere auf wäßriger Basis erhalten wird.

Bei einer bevorzugten Ausführungsform ist vorgesehen, daß die Deckschichten ausschließlich durch Schaum miteinander verbunden sind.

Bei Versuchen ist festgestellt worden, daß der zwischen den Deckschichten angeordnete Schaum, also nach hergestelltem Schichtenverbund, ein Trockengewicht zwischen 2 g/m² und 200 g/m² und insbesondere zwischen 10 g/m² und 40 g/m² haben sollte.

Wie zuvor ausgeführt worden ist, kann die Struktur als Funktionsebene auch durch wenigstens eine poröse Folie gebildet sein. Die poröse Folie wird insbesondere aus einer hochgefüllten Folie durch Verstrecken hergestellt. Die Füllung der Folie kann dabei vorzugsweise mehr als 20 Gew.-%, bevorzugt mehr als 40 Gew.-% des Gesamtgewichts der Folie betragen. Die Füllung sollte dabei Teilchen, wie beispielsweise Kreide und/oder Furnace-Ruß mit einem mittleren Teilchendurchmesser zwischen 0,5 µm und 50 µm aufweisen, wobei der Ruß vor allem auch zur Stabilisierung der Folie beiträgt. Durch das Verstrecken ergeben sich anschließend die Poren, wobei die poröse Folie selbst eine sehr geringe Schichtdicke mit einem Gewicht zwischen 2 g/m² und 200 g/m² aufweisen kann.

Wie zuvor erwähnt worden ist, können die Poren auch durch innenseitig an wenigstens einer Deckschicht vorgesehene Kanäle gebildet sein, wobei die Kanäle dann entsprechende Ausnehmungen an der Innenseite der jeweiligen Deckschicht darstellen, so daß die einzelnen Kanäle durch seitliche Stege voneinander begrenzt sind. In diesem Zusammenhang ist von der Anmelderin festgestellt worden, daß unter Berücksichtigung der erfindungsgemäßen maximalen Kanalquerschnittsfläche bestimmte Breiten-/Tiefen-Verhältnisse des Kanals nicht über bzw. unterschritten werden dürfen, um ein Kollabieren zu verhindern. Es versteht sich, daß die nachstehenden Ausführungen zu den Breiten-/Tiefenverhältnissen entsprechend bei elliptischen oder anderweitig geformten Poren entsprechend anzuwenden sind. Bei elliptischen Poren entspricht die große Ellipsenhalbachse dann der Breite und die kurze Ellipsenachse der Tiefe des Kanals.

Unter Berücksichtigung der vorgenannten maximalen Poren-Querschnittsfläche sollte das Breiten-/Tiefen-Verhältnis des Kanals zwischen 10:1 bis 1:10 liegen. Bevorzugt sind allerdings Verhältnisse zwischen 5:1 bis 1:5 und insbesondere zwischen 2:1 bis 1:2.

Dabei sollte die maximale Breite des Kanals vorzugsweise kleiner 150 µm sein, während die maximale Tiefe des Kanals 50 µm nicht überschreiten sollte.

Bevorzugt ist die Breite und/oder die Tiefe des Kanals kleiner 25 µm und insbesondere kleiner 20 µm. Die genaue Dimension der einzelnen Kanäle, das heißt deren Querschnittsfläche und Länge, ist letztlich bei vorgegebener Dampfdurchlässigkeit und Dichtigkeit abhängig von der Oberflächenspannung und der Ausbildung (hydrophil oder hydrophob) der Deckschicht oder des gesamten Laminats, der Tröpfchengröße, der Polarität des Fluids sowie weiteren Parametern.

Desweiteren sollte bei Ausbildung der Kanalstruktur zwischen den Deckschichten darauf geachtet werden, daß die die Kanalstruktur bildenden Stege, zwischen denen sich die Kanäle befinden, ebene Oberseiten aufweisen. Durch das Vorhandensein von ebenen Stegoberseiten kann beim Laminieren der beiden Deckschichten sichergestellt werden, daß sich zwischen den beiden Deckschichten eine gute und sichere Verbindung ergibt, was zur Erzielung der notwendigen Dichtigkeit des Laminats wichtig ist. Im übrigen können die Stege - bedingt durch unterschiedliche Herstellungsprozesse - sowohl gerade als auch schräge oder gewölbte Flanken aufweisen. Die Morphologie der Seitenflächen der Stege und des Kanals im übrigen hat jedoch, wie von der Anmelderin festgestellt worden ist, keinen Einfluß auf die Funktionalität des Laminats. Entscheidend für die gewünschte Funktion ist letztlich zumindest im wesentlichen der erwähnte Kanalquerschnitt.

Bevorzugt ist es bei dem erfindungsgemäß verwendeten Laminat so, daß eine Dichtigkeit bei einer statischen Wassersäule von wenigstens 200 mm, vorzugsweise wenigstens 400 mm und insbesondere mehr als 600 mm vorgesehen ist. Des weiteren ist bei einer bevorzugten Ausführungsform eine Dampfdurchlässigkeit (EN 1931/EN 12572, 23°C, 70% rel. Luftfeuchtigkeit) von wenigstens 100 g/m²d, vorzugsweise von mehr als 200 g/m²d und insbesondere von mehr als 400 g/m²d vorgesehen.

Bei einer bevorzugten Verwendung des Laminats im Sinne der vorliegenden Erfindung ist sowohl an der ersten als auch an der zweiten Deckschicht eine Kanalstruktur vorgesehen. Im laminierten Zustand befinden sich die Kanalstrukturen an den einander zugewandten Flächen. Wichtig ist in diesem Zusammenhang, daß die Kanäle der ersten Deckschicht und die Kanäle der zweiten Deckschicht einander nicht unmittelbar übereinanderliegen, sondern sich kreuzen, insbesondere in einem Winkel zwischen 5° und 175°. Die Kanäle können dabei sowohl linear als auch gewinkelt oder gebogen, bevorzugt auf einer Deckschicht parallel zueinander verlaufend, auf der Oberfläche der einzelnen Deckschichten vorliegen. Entscheidend ist nur, daß die Kanäle beider Deckschichten im Laminat nicht deckungsgleich übereinander liegen, sondern sich kreuzen. Hinzuweisen ist darauf, daß bei gezackten oder gebogenen Strukturen grundsätzlich auch Winkel von 0° bis 180° möglich sind. Voraussetzung ist, daß sich durch das Kreuzen der Kanäle der ersten Deckschicht und der Kanäle der zweiten Deckschicht sogenannte Kanalstellen, Durchgangsstellen und Verbindungsstellen ergeben. Bei einer Kanalstelle handelt es sich dabei um einen Kreuzungspunkt zwischen einem Kanal der einen Deckschicht und einem Steg der anderen Deckschicht. Bei einer Durchgangsstelle handelt es sich um einen Kreuzungspunkt zwischen einem Kanal der einen Deckschicht und einem Kanal der anderen Deckschicht. Schließlich handelt es sich bei einer Verbindungsstelle um einen Kreuzungspunkt zwischen einem Steg der einen Deckschicht und einem Steg der anderen Deckschicht. Die einzelnen Kanäle sollten eine solche Länge aufweisen, daß sich im Laminat mindestens eine Kanalstelle und eine Durchgangsstelle für einen Kanal ergibt. Nach oben hin ist die Länge eines Kanals bzw. Kanalabschnitts außer durch die Perforationen nicht begrenzt.

Bevorzugt liegt das Verhältnis der Kanalbreite zur Stegbreite bei beidseits strukturierten Deckschichten zwischen 2:1 und 1:10, vorzugsweise zwischen 1:3 und 1:5. Dabei beträgt der Flächenanteil der Kanalstellen an der Gesamtfläche wenigstens 25%, vorzugsweise wenigstens 32% und insbesondere liegt er zwischen 35% und 50%. Der Flächenanteil der Durchgangsstellen an der Gesamtfläche liegt wenigstens bei 2%, vorzugsweise bei wenigstens 5% und liegt insbesondere zwischen 6 bis 12%. Schließlich beträgt der Flächenanteil der Verbindungsstellen an der Gesamtfläche wenigstens 25%, vorzugsweise wenigstens 30% und liegt insbesondere zwischen 35 und 60%.

In der nachfolgenden Tabelle sind für verschiedene Breitenverhältnisse von Kanal/Steg der prozentuale Anteil an Verbindungsstellen, Durchgangsstellen und Kanalstellen, jeweils pro Flächeneinheit (FE) angegeben.

| Breitenverhältnis Kanal / Steg | Anteil Verbindungsstellen /FE [%] | Anteil Durchgangstellen / FE [%] | Anteil Kanalstellen / FE [%] |
|---|---|---|---|
| 1:1 | 25 | 25 | 50 |
| 1:2 | 44,45 | 11,1 | 44,45 |
| 1:3 | 56,25 | 6,25 | 37,5 |
| 1:4 | 64 | 4 | 32 |
| 1:5 | 70 | 3 | 27 |

Im übrigen wird darauf hingewiesen, daß die einzelnen Kanalstrukturen in den jeweiligen Deckschichten bzw. Folien, abgesehen von der Ausrichtung der Kanalstrukturen, nicht identisch sein müssen. Wichtig ist lediglich, daß zur Gewährleistung der Funktionalität des erfindungsgemäßen Laminats ein hinreichender Anteil an Kanalstellen, Durchgangsstellen und Verbindungsstellen in den entsprechenden Dimensionen gegeben ist.

Statt der Verwendung von Deckschichten bzw. Filmen, die jeweils eine Mikro- oder Kanalstrukturierung aufweisen, ist es auch möglich, daß lediglich eine Deckschicht eine Kanalstruktur, dann jedoch mit gekreuzten Kanälen, aufweist, wobei sich die Kanäle dann in einem Winkel zwischen 5° und 175° kreuzen. Im Extremfall handelt es sich einfach um unterbrochene Kanäle in eine Richtung. In diesem Fall ist es günstig, wenn die andere Deckschicht unstrukturiert ist, wenngleich grundsätzlich ebenfalls eine Kanalstruktur vorgesehen sein kann. Die Verwendung einer unstrukturierten Deckschicht für diesen Fall ist jedoch besonders einfach und kostengünstig, zumal die unstrukturierte Deckschicht auf ihrer der strukturierten Deckschicht zugewandten Seite ein Klebmittel aufweisen kann, was das Laminieren vereinfacht. Bei Verwendung einer Deckschicht mit einer Kanalstruktur mit gekreuzten Kanälen und einer unstrukturierten Deckschicht ist es so, daß sich lediglich Kanalstellen und Verbindungsstellen ergeben. In diesem Falle entfallen die Durchgangsstellen. Hierbei entspricht der Anteil der Kanalstellen pro Flächeneinheit der Summe der Kanal- und Durchgangsstellen der zuvor beschriebenen Ausführungsform mit zwei strukturierten Deckschichten/Folien. Hierbei kann es im übrigen dann so sein, daß das Verhältnis der Kanalbreite zur Stegbreite zwischen 2:1 und 1:20, vorzugsweise zwischen 1:2 und 1:10, liegt. Der Flächenanteil der Kanalstellen an der Gesamtfläche beträgt bevorzugt wenigstens 27%, vorzugsweise wenigstens 36% und liegt bevorzugt zwischen 45 und 50%. Der Flächenanteil der Verbindungsstellen an der Gesamtfläche beträgt wenigstens 25%, vorzugsweise wenigstens 30% und liegt insbesondere zwischen 45 und 55%.

Zur Gewährleistung einer hinreichenden Dichtigkeit einerseits und der notwendigen Dampfdurchlässigkeit sowie Eigenstabilität des Laminats andererseits ist im Rahmen von Versuchen außerdem festgestellt worden, daß der mit Perforationen versehene Flächenanteil einer Deckschicht zwischen 1 bis 25% der Gesamtfläche der Deckschicht betragen kann. Je größer dieser Anteil ist, desto diffusionsoffener ist die Einzelfolie bzw. Deckschicht, allerdings leidet die mechanische Stabilität des Laminats.

Günstig ist es in diesem Zusammenhang, daß 0,5 bis 100 Perforationen pro cm² vorgesehen sind. Bevorzugt sind 5 bis 50 Perforationen pro cm². Bei den Perforationen kann es sich sowohl um Rundlöcher als auch um Schlitze handeln. Auch sind ovale Perforationen oder andere Geometrien möglich. Wichtig ist gerade bei Ausbildung einer Kanalstruktur an den Deckschichten, daß die Ausformung der Löcher oder Schlitze so erfolgt, daß auf der mikrostrukturierten Seite der betreffenden Deckschicht keine zusätzlichen Strukturen entstehen, die die Dimensionen der Kanalstrukturen übersteigen bzw. stören.

Eine bekannte Technik zur Perforation von Folien stellt die Nadelperforation dar. Bei dieser Technik werden mittels auf Walzen angebrachter Nadeln kontinuierlich Löcher in die Folie gestochen. Dieser Prozeß kann sowohl mit kalten als auch mit geheizten Nadelsegmenten durchgeführt werden. Bei der Kaltperforation ist zu beachten, daß das kalte Folien- oder Deckschichtmaterial bei der Durchdringung der Nadel einen Trichter bildet, die sich auf der glatten, nicht strukturierten Folienseite befinden sollte, um die Funktionalität der Deckschicht zu gewährleisten. Bei der Heißnadelperforation ist zu beachten, daß bei Einstechen der Nadel in die Folie ein sogenannter Schmelzrand entsteht, der die Dimensionen der Mikrostruktur übersteigen kann. Daher sollte auch hier darauf geachtet werden, daß die Folie derart heißnadelperforiert wird, daß sich der Schmelzrand möglichst auf der der strukturierten Folienseite abgewandten Seite der Deckschicht ergibt.

Im übrigen können die Perforationen aber auch gestanzt werden. Durch das Stanzen ergeben sich keine störenden Ränder um die Perforationen herum, so daß keine unerwünschten Stellen entstehen. Darüber hinaus sind auch berührungslose Verfahren zur Perforation möglich, beispielsweise mittels energiereicher Laserstrahlung, Wasserstrahlen mit hohem Druck oder über Hochspannungsentladungen. Unabhängig von dem Perforationsverfahren sollten die Perforationen, wenn sie als Schlitze ausgebildet sind, eine Länge zwischen 0,5 mm und 20 mm aufweisen, während bei runden Perforationen der Durchmesser pro Perforation zwischen 15 µm und 1500 µm liegen sollte.

Desweiteren ist zur Erzielung einer hinreichenden Dichtigkeit festgestellt worden, daß zwischen einer Perforation der ersten Deckschicht und der nächsten Perforation der zweiten Deckschicht wenigstens eine, vorzugsweise zwei und insbesondere fünf Kanalstellen liegen sollten, wobei eine Kanalstelle durch zwei Kreuzungsstellen bzw. zwei Durchtrittsstellen begrenzt ist.

Desweiteren hat sich gezeigt, daß die Dichtigkeit des Laminats weiter gesteigert werden kann, wenn die Kanäle mit einer erhabenen Substruktur versehen werden. Ihre Dimension beträgt maximal ein Fünftel der kleinsten Kanaldimension und bevorzugt maximal ein Zehntel. Es kann sich dabei um Rillen in beliebigem Winkel zur Vorzugsrichtung des Kanals handeln. Auch sind noppenförmige oder aufgerauhte Strukturen geeignet. Die Substruktur erlaubt den Einsatz größerer Primärstrukturen bei gleichem Dichtigkeitsergebnis oder die Erhöhung der Dichtigkeit bei gleicher Primärdimension.

Bei dem Material der einzelnen Deckschichten bzw. Folien an sich handelt es sich bevorzugt um amorphe wie kristalline, vorzugsweise thermoplastische Kunststoffe, wie z. B. Polyolefine (Polypropylen als Homo-, Co-, BlockCopolymer sowie Polyethylen), Polyamide, Polyester, Polyurethane, Polystryrole, PVC, Biokunststoffe, etc., Blends der vorgenannten Kunststoffe, Compounds oder Batche. Es können aber auch andere Polymere wie Elastomere, Harze oder Dispersionen verwendet werden. Weiterhin können die vorgenannten Kunststoffe und Polymere unterschiedliche Stabilisatoren (z. B. Thermo- oder UV-Stabilisatoren), Füllstoffe und/oder andere funktionale Additive wie Pigmente, Flammhemmer oder ähnliches enthalten. Weiterhin können Vorlaminate aus Folien und Verstärkungen wie Vliesen, Gelegen oder Gittern verwendet werden. Auch ist die Bildung des erfindungsgemäßen Laminats aus anorganischen Folien wie beispielsweise Keramik denkbar.

Die Dichtigkeit des Laminats gegen Wasser kann weiter gesteigert werden, indem hydrophobe Materialien verwendet werden. Insbesondere gilt dies für die Oberfläche der Kanäle. Erreicht wird dies durch Auswahl der geeigneten Grundmaterialien oder durch Nachbehandlung der Deckschichten und/oder des Laminats mit flüssigen oder gasförmigen Hydrophobierungsmitteln.

Die Flächengewichte der einzelnen Deckschichten liegen zwischen 3 und 1200 g/m². Bevorzugt werden 7-100 g/m² und insbesondere 10-50 g/m² verwendet. Die Dicke der Deckschichten liegen zwischen 2 und 1500 µm inklusive Struktur, auch wenn diese als separate Funktionsschicht wie beispielsweise als Schaumschicht oder separate poröse Folienschicht vorgesehen ist. Bevorzugt liegt die Dicke der Schichten inklusive Funktionsschicht zwischen 8-100 µm und insbesondere zwischen 12-45 µm.

Erfindungsgemäß kann vorgesehen sein, dass eine Deckschicht auf einer Seite (Innenseite) mit offenem Schaum beschichtet wird, wobei auf den Schaum dann eine weitere Deckschicht aufgebracht wird. Der Schaum selbst weist über seine (Horizontal)-Poren eine quer zum Schichtaufbau, das heißt in der Laminatebene ausgerichtete Porosität auf. Die Dimensionen der Horizontal-Poren entsprechen den eingangs genannten. Dieses Verfahren bietet eine Reihe von Vorteilen, da unstrukturierte Deckschichten mit beliebig hergestellter Perforation verwendet werden können. Insbesondere bei zur Haftungsverbesserung vorbehandelten Innenseiten der Deckschichten läßt sich ein vollflächiger Kontakt der Deckschichten zum Schaum erzielen, wobei die Größe der Horizontal-Poren und damit die Dampfdurchlässigkeit über verschiedene Verfahrensparameter bei der Herstellung, wie beispielsweise Schaumbildung, Temperatur und Druck kontrollieren lassen.

Bevorzugt ist in diesem Zusammenhang vorgesehen, daß der auf die Deckschicht aufgebrachte Schaum für ein vorgegebenes Zeitintervall bei einer Temperatur größer 40°C vorgetrocknet wird. Im übrigen sollte bevorzugt vorgesehen sein, daß der Schichtenverbund nach Aufbringen der zweiten Deckschicht bei einer Temperatur größer 40°C und einem Druck von größer 100 N/cm kalandriert wird.

Des weiteren kann erfindungsgemäß bevorzugt vorgesehen sein, daß der Schichtenverbund nach dem Kalandrieren bei einer Temperatur größer 40°C für ein vorgegebenes Zeitintervall fixiert wird.

Bei einer anderen alternativen Ausführungsform der Erfindung wird eine poröse Folie verwendet, die zwischen zwei bevorzugt unstrukturierte Deckschichten mit beliebig hergestellter Perforation laminiert wird. Auch die einander zugewandten Innenseiten dieser Deckschichten können wie zuvor ausgeführt zur Haftungsverbesserung vorbehandelt sein. Die poröse Folie als Funktionsebene wird durch Verstrecken hergestellt, wobei als Ausgangsmaterial bevorzugt eine hochgefüllte Folie verwendet wird. Bevorzugt wird die Folie monoaxial um einen Faktor von wenigstens 1,2 verstreckt. Bei dieser Ausführungsform erfolgt das Laminieren vorzugsweise unter Verwendung von Sprühklebern, der insbesondere zwischen der jeweiligen Seite der Funktionsebene und der Deckschicht vorgesehen ist.

Bei einer anderen Alternative der Erfindung wird ein Schmelzefilm zur Herstellung einer Deckschicht für ein dampfdurchlässiges Laminat zur Verwendung im Baubereich auf wenigstens eine mikrostrukturierte Gießwalze extrudiert, wobei die Mikrostruktur der Gießwalze als Kanalstruktur im Schmelzefilm abgebildet wird. Bevorzugt durch Abkühlen des Schmelzefilms wird die Kanalstruktur in der hergestellten Deckschicht fixiert. Die Deckschicht kann dann vor dem Verbinden mit einer weiteren Deckschicht perforiert und nach dem Perforieren mit der weiteren Deckschicht, die ebenfalls bereits perforiert sein kann oder aber auch erst später perforiert wird, laminiert werden. Die weitere Deckschicht kann entsprechend der ersten Deckschicht hergestellt worden sein und dementsprechend ebenfalls eine Kanalstruktur aufweisen. Es ist aber auch möglich, daß die weitere Deckschicht unstrukturiert ist. In diesem Falle weist die Kanalstruktur der ersten Deckschicht dann eine Kanalstruktur mit gekreuzten Kanälen auf.

Bei einem anderen alternativen Ausgestaltung der Erfindung ist vorgesehen, daß in eine Deckschicht mittels einer mikrostrukturierten Prägewalze eine Kanalstruktur eingeprägt und daß dann die Deckschicht mit einer weiteren Deckschicht laminiert wird. Auch hierbei kann die weitere Deckschicht mit einer entsprechenden Kanalstruktur versehen oder aber auch unstrukturiert sein. Um in diesem Zusammenhang die Mikrostruktur der Prägewalze in die Deckschicht vollständig abzubilden, bietet es sich an, daß die Deckschicht vor dem Prägen erwärmt wird, und zwar insbesondere bis an den Schmelzbereich, wobei die Prägewalze gekühlt sein sollte. Hierbei bietet es sich dann an, daß die Deckschicht bereits vor dem Prägen perforiert wird. Der Vorteil hierbei ist, daß eventuelle Dicken-Inhomogenitäten, insbesondere im Randbereich der Perforationen, egalisiert werden können.

Überraschenderweise hat sich beim Strukturieren der Deckschichten zudem gezeigt, daß die Verbindung mit anderen Zusatzschichten, wie z.B. Verstärkungsschichten, im oder vor dem Strukturierungsprozeß möglich ist und die Strukturierung dennoch gelingt. So kann z.B. eine Extrusionsbeschichtung auf der strukturierten Gießwalze erfolgen, wobei die Struktur in ausreichender Genauigkeit abgeformt wird. Auch ist der Zulauf einer Zusatzschicht im oder vor dem Strukturierungsprozeß durch Prägen möglich. Die Zusatzschicht wird in allen Fällen auf der nicht zu strukturierenden Seite angeordnet. Mögliche Zusatzschichten sind z.B. die bei den Vorlaminaten zuvor genannten Verstärkungen.

Grundsätzlich ist es möglich, die einzelnen Folien bzw. Deckschichten thermisch miteinander zu laminieren. Dabei werden die Folien dann über Walzen geführt, wobei eine oder auch beide Folien insbesondere auf der mikrostrukturierten Kanalseite mittels beheizter Walzen oder Heißluft bis an den Schmelzpunkt erwärmt und anschließend mittels eines Kalanders miteinander verbunden werden. Bei einem derart erhaltenen Laminat sind die Folien idealerweise an allen Kreuzungspunkten der Stege (Verbindungsstellen) miteinander verbunden. Je nach Breiten der Kanäle und dem Verhältnis von Kanal- zu Stegbreite ergibt sich dann der zuvor bereits erwähnte Anteil der Verbindungsfläche an der Gesamtfläche. Wichtig ist, daß beim thermischen Laminieren die Kanalstruktur durch Anschmelzen und zuviel Druck verschlossen werden kann. Zu wenig Temperatur und zu wenig Druck im Prozeß bewirken allerdings keine saubere vollständige Verbindung zwischen beiden Folienebenen. Zur Erzielung der gewünschten Dimensionen der Kanalstruktur ist daher auf die geeignete Wahl der Parameter Druck und Temperatur zu achten. Hier bietet sich insbesondere die Möglichkeit, die Dimension der Kanalstellen-Querschnitte durch das Ausmaß des Einsinkens der Stege ineinander bei beidseitig strukturierten Deckschichten bzw. des Einsinkens der Stege der strukturierten Deckschicht in die unstrukturierte Deckschicht zu beeinflussen. In Zusammenhang mit der thermischen Laminierung kann es besonders bevorzugt sein, ergänzend zu dem thermischen Laminieren ein Ultraschallverschweißen vorzusehen.

Neben dem thermischen Laminieren kommt auch das Laminieren durch Kleben in Betracht, nämlich insbesondere durch
- das sogenannte Curtain Coating
- das Verkleben über Walzenauftragssysteme
- den Sprühauftrag von Klebmitteln.

Beim Curtain Coating wird ein geschlossener, sehr dünner Klebefilm mit Schichtdicken von kleiner 10 µm, besser kleiner 5 µm und bevorzugt kleiner 3 µm auf eine der beiden Folien aufgebracht. Dieser Film bildet einen Überzug über die Gesamtfolienoberfläche, so daß die Kanalstruktur erhalten bleibt. Die Schichtdicke und die Eigenschaften des Klebmittels sind dabei bevorzugt so zu wählen, daß der Klebefilm in den Perforationslöchern von allein aufreißt, so daß die Perforation geöffnet bleibt.

Beim Verkleben über Walzenauftragssysteme können ebenfalls sehr dünne Klebefilme aufgebracht werden. Hierbei können sowohl lösungsmittelhaltige als auch lösungsmittelfreie Klebmittel verwendet werden. Bei bestimmten Materialien, insbesondere bei reinen Polyolefinfolien, sollte zur besseren Oberflächenbenetzung eine Corona-, Plasma- oder Primer-Vorbehandlung vorgeschaltet werden. Im Gegensatz zum Curtain Coating werden beim Walzenauftrag vorzugsweise nur die erhabenen Stege, das heißt deren Oberseiten, mit Kleber benetzt, während die Kanäle frei von Klebmittel bleiben, also in die Kanäle kein Kleber gelangen sollte. Die Perforation in Form von Löchern oder Schlitzen wird zudem bei diesem Verfahren weniger anfällig für einen teilweisen oder vollständigen Verschluß sein.

Bei einer weiteren Ausgestaltung der Erfindung, bei der ebenfalls ein Verkleben über Walzenauftragssysteme stattfindet, ist vorgesehen, daß eine unstrukturierte Deckschicht mit einer weiteren unstrukturierten Deckschicht mittels eines Klebmittels laminiert wird, wobei das Klebmittel als Kanalstruktur mit Stegen und dazwischenliegenden Kanälen auf wenigstens eine Deckschicht aufgebracht, insbesondere aufgedruckt wird. Das Klebmittel als solches erfüllt dann eine Doppelfunktion, nämlich zum einen die Kleb- bzw. Verbindungsfunktion und zum anderen die Strukturgebung über das Klebmittel selbst. In diesem Zusammenhang versteht es sich, daß entsprechend strukturierte Walzen vorgesehen sind, über die das Klebmittel auf die Folien aufgebracht wird. Die Dimensionen entsprechen den zuvor beschriebenen.

Alternativ ist es möglich, Klebmittel auf die Deckschichten aufzusprühen. Dabei wird dann bevorzugt ein Sprühkleber oder Aerosole von Klebeemulsionen/- suspensionen verwendet. Durch den Einsatz geeigneter Düsen können Klebertröpfchen oder -fäden mit entsprechend kleinen Dimensionen erzeugt werden, die sich sowohl zum Verkleben der beiden Folien eignen als auch zur Bildung der Kanalstruktur dienen. Die Klebe-Fäden oder -Partikel müssen dabei in der Größe der eingangs genannten Kanal- bzw. Stegdimensionen liegen, so daß sich zwischen den Klebmittelstegen Kanäle ergeben, die die Funktion des erfindungsgemäßen Laminats gewährleisten.

Im übrigen versteht es sich, daß das Aufbringen von Klebmitteln über Sprühauftrag auch nur dazu genutzt werden kann, das Klebmittel auf die Kanalstruktur aufzubringen, ohne daß sich die zusätzliche Funktion der Mikrostrukturierung durch das Klebmittel selbst ergibt.

Bei einer alternativen Ausführungsform der Erfindung ist vorgesehen, daß ein Schmelzefilm zur Herstellung einer unstrukturierten Deckschicht extrudiert und Fasermaterial zur Erzeugung einer Kanalstruktur dem Schmelzefilm zugeführt und darin eingebunden wird, wobei die Fasern dann derart ausgebildet sind und angeordnet werden, daß sich die notwendige Kanalstruktur mit Stegen und Kanälen insbesondere mit den zuvor erwähnten Abmaßen ergibt. Die über das Fasermaterial mikrostrukturierte Deckschicht wird dann mit einer weiteren strukturierten oder unstrukturierten Deckschicht laminiert. Bevorzugt ist es bei diesem Verfahren, daß die durch das Fasermaterial mikrostrukturierte Deckschicht derart mit der weiteren Deckschicht thermisch laminiert wird, daß lediglich die äußere Oberfläche des Fasermaterials im wesentlichen unter Erhalt der Kanalstruktur angeschmolzen wird.

Im übrigen kann bei allen vorgenannten Ausführungsformen vorgesehen sein, daß wenigstens eine Deckschicht auf der der Struktur zugewandten Seite Corona-, Plasma- oder Primer-vorbehandelt wird.

Im Zusammenhang mit der Perforierung kann bei allen vorgenannten Verfahren vorgesehen sein, daß die Perforierung der Deckschichten durch mechanische Verfahren, insbesondere Schlitzen, Heißnadelperforation, Kaltperforation oder Stanzen, Wasserstrahlen oder berührungslose Verfahren, insbesondere mittels energiereicher Laserstrahlung oder Hochspannungsentladung erfolgt.

Im übrigen können sämtliche der vorgenannten Ausführungsformen auch auf Coex-Folien angewandt werden. Diese haben den Vorteil, daß eine Siegelschicht verwendet werden kann, die einen niedrigen Schmelzpunkt hat und somit die Folie nicht zu hoch erwärmt werden muß. Ein weiterer Vorteil ist, daß die Siegelschicht mitstrukturiert ist. Auch läßt sich durch die Dicke der Siegelschicht das Ausmaß der durch die Laminierung gegenüber dem unverbundenen Ausgangszustand verminderten Querschnitt der Kanalstellen exakt steuern.

Es wird ausdrücklich darauf hingewiesen, daß alle vorgenannten und auch in den Ansprüchen angegebenen Intervalle und Bereichsangaben sämtliche Einzelwerte, die innerhalb des jeweiligen Bereichs bzw. Intervalls liegen, einschließlich aller Dezimalstellen, umfassen und als erfindungswesentlich angesehen werden, auch wenn diese Einzelwerte nicht im einzelnen angegeben sind. Die Angabe "kleiner als 100 µm²" umfaßt also beispielsweise die Werte 99, 98, 97, ..., 3, 2, 1 einschließlich sämtlicher Dezimalstellen.

Nachfolgend werden Ausführungsbeispiele der Erfindung anhand der Zeichnung und der Zeichnung selbst erläutert. Es zeigt
- Fig. 1: eine Querschnittsansicht einer Ausführungsform eines Laminats zur erfindungsgemäßen Verwendung im Baubereich,
- Fig. 2: eine Draufsicht auf eine Ausführungsform eines Laminats zur erfindungsgemäßen Verwendung im Baubereich,
- Fig. 3: eine Draufsicht auf eine andere Ausführungsform eines Laminats zur erfindungsgemäßen Verwendung im Baubereich,
- Fig. 4: eine Querschnittsansicht einer Deckschicht für ein Laminats zur erfindungsgemäßen Verwendung im Baubereich,
- Fig. 5: eine perspektivische Ansicht der Deckschicht auf Fig. 4,
- Fig. 6: eine Querschnittsansicht einer anderen Deckschicht für ein Laminat zur erfindungsgemäßen Verwendung im Baubereich,
- Fig. 7: eine perspektivische Ansicht der Deckschicht aus Fig. 6,
- Fig. 8: eine Querschnittsansicht einer weiteren Deckschicht für ein Laminat zur erfindungsgemäßen Verwendung im Baubereich,
- Fig. 9: eine perspektivische Ansicht der Deckschicht aus Fig. 8,
- Fig. 10: eine Draufsicht auf eine weitere Deckschicht für ein Laminat zur erfindungsgemäßen Verwendung im Baubereich,
- Fig. 11: eine perspektivische Ansicht der Deckschicht aus Fig. 10,
- Fig. 12: eine perspektivische Ansicht einer anderen Ausführungsform einer Deckschicht für ein Laminat zur erfindungsgemäßen Verwendung im Baubereich,
- Fig. 13: eine perspektivische Ansicht eines Teils eines Laminats zur erfindungsgemäßen Verwendung im Baubereich mit zum Teil abgenommener oberer Deckschicht,
- Fig. 14: eine perspektivische Ansicht entsprechend Fig. 13 einer anderen Ausführungsform eines Laminats zur erfindungsgemäßen Verwendung im Baubereich,
- Fig. 15: eine Querschnittsansicht einer weiteren Ausführungsform eines Laminats zur erfindungsgemäßen Verwendung im Baubereich,
- Fig. 16: eine Querschnittsansicht einer anderen Ausführungsform eines Laminats zur erfindungsgemäßen Verwendung im Baubereich,
- Fig. 17: eine schematische Darstellung einer Ausführungsform einer Vorrichtung zur Herstellung eines Laminats zur erfindungsgemäßen Verwendung im Baubereich,
- Fig. 18: eine schematische Darstellung einer weiteren Ausführungsform einer Vorrichtung zur Herstellung eines weiteren Laminats zur erfindungsgemäßen Verwendung im Baubereich,
- Fig. 19: eine schematische Darstellung einer weiteren Ausführungsform einer Vorrichtung zur Herstellung eines weiteren Laminats zur erfindungsgemäßen Verwendung im Baubereich,
- Fig. 20: eine schematische Darstellung einer weiteren Ausführungsform einer Vorrichtung zur Herstellung eines weiteren Laminats zur erfindungsgemäßen Verwendung im Baubereich und
- Fig. 21: eine schematische Darstellung einer weiteren Ausführungsform einer Vorrichtung zur Herstellung eines weiteren Laminats zur erfindungsgemäßen Verwendung im Baubereich.

Dargestellt und beschrieben ist ein dampfdurchlässiges und zumindest bei geringen statischen Wassersäulen gegen Flüssigkeitsdurchtritt dichtes Laminat 1 zur Verwendung im Baubereich, das bei den einzelnen beschriebenen und dargestellten Ausführungsformen eine erste Deckschicht 2 und eine zweite Deckschicht 3 aufweist. Bei den Deckschichten 2, 3 handelt es sich um Folien aus thermoplastischem Kunststoff. Die Deckschichten 2, 3 können grundsätzlich mehrschichtig sein, insbesondere kann es sich um Coex-Folien handeln, auch wenn dies im einzelnen nicht dargestellt ist. Im übrigen versteht es sich, daß grundsätzlich auch weitere durchlässige Deckschichten vorgesehen sein können.

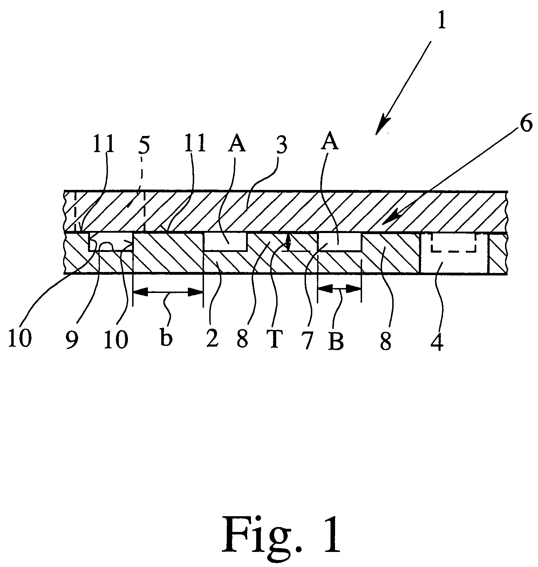

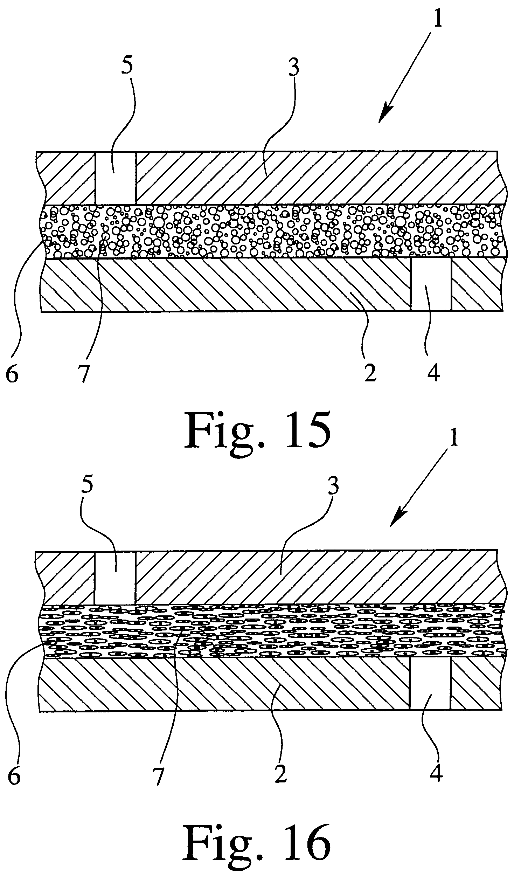

In jeder der in den Fig. 1 bis 15 dargestellten Deckschichten 2, 3 sind eine Vielzahl von Perforationen 4, 5 vorgesehen. Im übrigen sind die beiden Deckschichten 2, 3 derart miteinander verbunden, daß die Perforationen 4 der ersten Deckschicht 2 sich nicht mit den Perforationen 5 der zweiten Deckschicht 3 überdecken. Dabei findet auch keine teilweise Überdeckung statt. Im übrigen ist zwischen den Deckschichten 2, 3 eine mikroporöse Struktur 6 mit einer Vielzahl von Poren 7 vorgesehen. Die Struktur 6 stellt letztlich eine Funktionsebene dar, bei der eine Porosität quer zum Schichtaufbau, also in der Schichtebene, über die Poren 7, bei denen es sich letztlich um Horizontal-Poren handelt, gegeben ist. Dabei unterscheiden sich die Ausführungsformen der Fig. 1 bis 14 sowie 15 und 16, da die Struktur und die Poren dort jeweils unterschiedlich ausgebildet sind. Bei den Ausführungsformen gemäß den Fig. 1 bis 14 sind die Funktionsebenen jeweils an wenigstens einer, zum Teil auch an beiden einander zugewandten Innenseiten der Deckschichten 2, 3 vorgesehen. Die Poren 7 werden dabei von Kanälen gebildet. Jeder der Kanäle ist durch seitliche Stege 8 und nach unten hin durch einen Kanalboden begrenzt. Bei der Ausführungsform gemäß Fig. 15 wird die Struktur 6 hingegen durch eine Schaumlage gebildet, wobei sich die Poren 7 im Schaum befinden und die horizontale Porosität hindurch gewährleistet ist. Bei der Ausführungsform gemäß Fig. 16 wird die Struktur 6 durch eine verstreckte, hochgefüllte Folie 6 gebildet, bei der sich die Poren 7 innerhalb der Struktur 6 bzw. verstreckten Folie befinden.

Wesentlich ist nun, daß die Poren 7 jeweils eine durchschnittliche lichte Querschnittsfläche A haben, die kleiner als 200 µm² ist. Dabei wird die Querschnittsfläche A bei den Ausführungsformen der Fig. 1 bis 14 definiert durch den Kanalboden 9, die Seitenflächen 10 der benachbarten Stege 8, zwischen denen der jeweilige Kanal angeordnet ist, und der Verbindungslinie zwischen den Oberseiten 11 von benachbarten Stegen 8. Dabei sind die Oberseiten 11 jeweils vorzugsweise eben. Bei der Ausführungsform gemäß Fig. 15 haben die Poren 7 eine kreisartige Form, bei der Ausführungsform gemäß Fig. 16 tendenziell eine elliptische Querschnittsform.

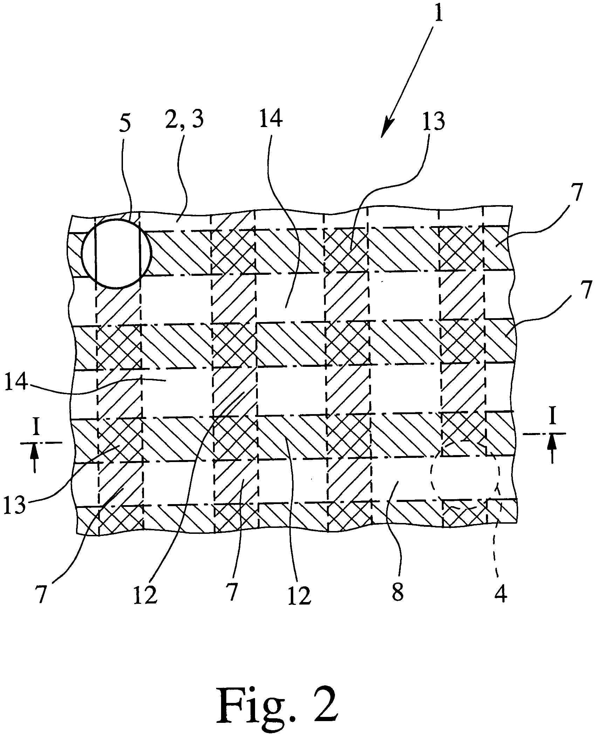

In Fig. 2 ist eine Ausführungsform eines Laminats 1 zur Verwendung im Baubereich dargestellt, bei dem sowohl die erste Deckschicht 2 als auch die zweite Deckschicht 3 jeweils eine Kanalstruktur auf einander zugewandten Seiten aufweisen. Die beiden Deckschichten 2, 3 sind auf den die Kanalstrukturen aufweisenden Innenseiten miteinander verbunden. In Fig. 2 weist die untere, erste Deckschicht 2 längslaufende Kanäle als Poren 7 auf, die einfach schraffiert sind. Die obere zweite Deckschicht 3 weist querlaufende Kanäle auf, die ebenfalls einfach schraffiert sind. In der ersten Deckschicht 2 befindet sich eine kreisförmige Perforation 4, während sich in der zweiten Deckschicht 3 versetzt zur Perforation 4 eine weitere Perforation 5 befindet. Die Kanäle der beiden Deckschichten 2, 3 sind vorliegend im rechten Winkel zueinander angeordnet, was jedoch nicht notwendigerweise der Fall sein muß. Letztlich ist lediglich ein Kreuzen der einzelnen Kanäle der beiden Deckschichten 2, 3 erforderlich.

Durch das Kreuzen der Kanalstrukturen in den beiden Deckschichten 2, 3 ergeben sich einfach schraffierte Kanalstellen 12, doppelt-schraffierte Durchgangsstellen 13 und unschraffierte Verbindungsstellen 14. Wie sich aus Fig. 2 ergibt, handelt es sich bei einer Kanalstelle 12 um einen Kreuzungspunkt zwischen einem Kanal der ersten Deckschicht 2 und einem Steg 8 der anderen Deckschicht 3. Bei einer Durchgangsstelle 13, bei der ein Durchtritt von einer Deckschichtebene in die andere Deckschichtebene möglich ist, handelt es sich um einen Kreuzungspunkt zwischen einem Kanal der einen Deckschicht und einem Kanal 7 der anderen Deckschicht 3. Schließlich handelt es sich bei einer Verbindungsstelle 14 um einen Kreuzungspunkt zwischen einem Steg 8 der ersten Deckschicht 2 und einem Steg 8 der zweiten Deckschicht 3.

Neben der Querschnittsfläche A sollten bestimmte weitere Abmaße und Verhältnisse bei dem Laminat 1 eingehalten werden, um die erfindungsgemäße Funktion, das heißt hinreichende Dichtigkeit bei ausreichender Dampfdurchlässigkeit, besonders gut zu gewährleisten. So sollte - unter Bezugnahme auf Fig. 1 - die Querschnittsfläche A bevorzugt zwischen 5 und 150 µm² und das Verhältnis der Breite B zur Tiefe T der einzelnen Kanäle bevorzugt zwischen 5:1 und 1:5 liegen. Außerdem sollte die Breite B und auch die Tiefe T der Kanäle 7 jeweils vorzugsweise kleiner als 25 µm² sein. Im übrigen sollte, wenngleich dies in Fig. 2 nicht maßstabsgerecht dargestellt ist, das Verhältnis der Breite B eines Kanals 7 zur Breite b eines Steges 8 bevorzugt zwischen 1:3 und 1:5 liegen.

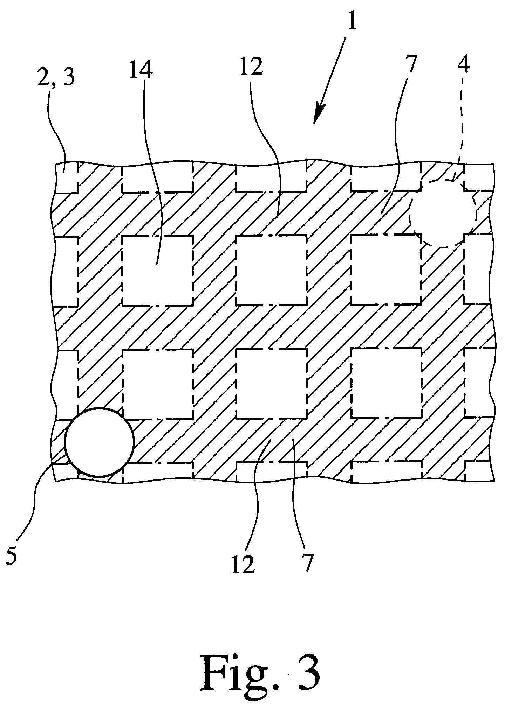

In Fig. 3 ist ein Laminat 1 zur Verwendung im Baubereich dargestellt, bei dem die untere erste Deckschicht 2 eine Kanalstruktur mit gekreuzten Kanälen aufweist. Die Kanäle verlaufen dabei im rechten Winkel zueinander. Die obere zweite Deckschicht 3 ist unstrukturiert, weist also keine Kanalstruktur auf. Allerdings weist die obere Deckschicht 3 Perforationen 5 auf, von denen eine dargestellt ist, während die erste, untere Deckschicht 2 Perforationen 4 aufweist, von denen eine gestrichelt dargestellt ist. Bei dieser Ausführungsform ergeben sich lediglich Kanalstellen 12, die gestrichelt dargestellt sind, und Verbindungsstellen 14, die unschraffiert dargestellt sind. Im Gegensatz zur Ausführungsform gemäß Fig. 2 entfallen die Durchgangsstellen 13. Bei der Ausführungsform gemäß Fig. 3 gehören die Kreuzungspunkte zwischen längs- und querlaufenden Kanälen zu den Kanalstellen 12. Ein Durchtritt von einer Schichtebene in die nächste erfolgt lediglich im Bereich der Perforationen 4, 5.

Im übrigen ist es bei einem Laminat 1 mit einer gekreuzten Kanalstruktur in der einen Deckschicht 2 und einer unstrukturierten anderen Deckschicht 3 so, daß das Verhältnis der Breite B eines Kanals zur Breite b eines Stegs 8 bevorzugt zwischen 1:2 und 1:10 liegt.

In Fig. 3 ist nicht dargestellt, daß sich auf der unstrukturierten Deckschicht, also der Deckschicht 3, und zwar auf ihrer der strukturierten Deckschicht 2 zugewandten Innenseite eine Schicht mit einem Klebmittel vorgesehen sein kann, um eine Kleb-Laminierung vorzunehmen.

Bei der Ausführungsform gemäß Fig. 2 liegen zwischen der oberen Perforation 5 und der unteren Perforation 4 im günstigsten Fall als kürzeste Strecke mindestens fünf Kanalstellen 12. Durch diese hohe Anzahl an Kanalstellen 12 ergibt sich einerseits die Dichtigkeit und andererseits eine hinreichende Durchlässigkeit für Dampf. Auch bei der Ausführungsform gemäß Fig. 3 sind im günstigsten Fall mindestens fünf Kanalstellen 12 für den Dampf zu überwinden, um von der einen Perforation 5 in der Deckschicht 3 zur nächsten Perforation 4 in der Deckschicht 1 zu gelangen. Eine Kanalstelle 12 ergibt sich bei Fig. 3 durch die Länge eines Kanalabschnitts 12 zwischen zwei Kreuzungspunkten einschließlich der Länge eines Kreuzungspunkts.

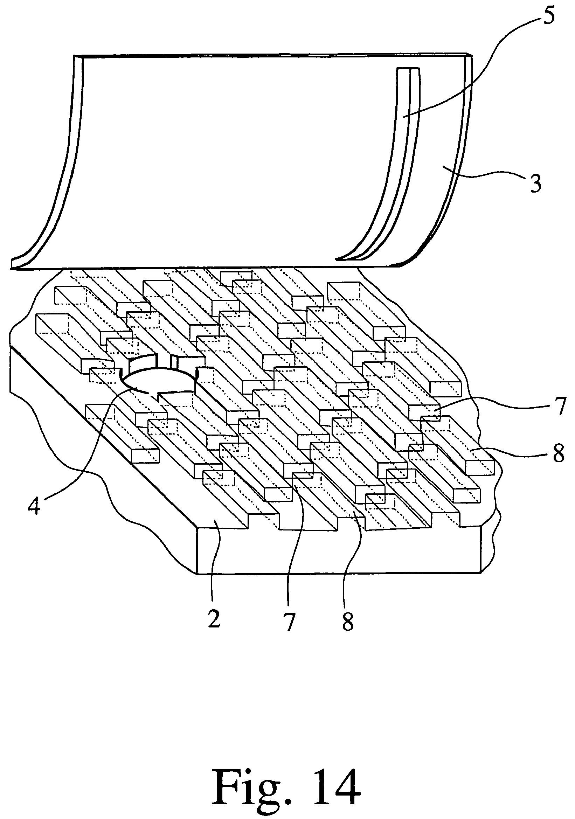

Wenngleich sich dies aus den einzelnen Darstellungen nicht ergibt, liegt der perforierte Flächenanteil der Deckschichten 2, 3 jeweils zwischen 1% und 25% der Gesamtfläche der jeweiligen Deckschicht 2, 3, wobei zwischen 0,5 und 100 Perforationen pro cm² vorgesehen sein sollten. Während beispielsweise in den Fig. 1 bis 3 und 13 die Perforationen 4, 5 als Rundlöcher ausgebildet sind, ist bei der Ausführungsform gemäß Fig. 14 zumindest eine Deckschicht 3 mit Schlitzen als Perforationen versehen. Die Schlitze sollten dabei eine Länge zwischen 0,5 mm und 2 mm haben, während bei runden Perforationen der Durchmesser pro Perforation zwischen 15 und 1500 µm² liegen sollte.

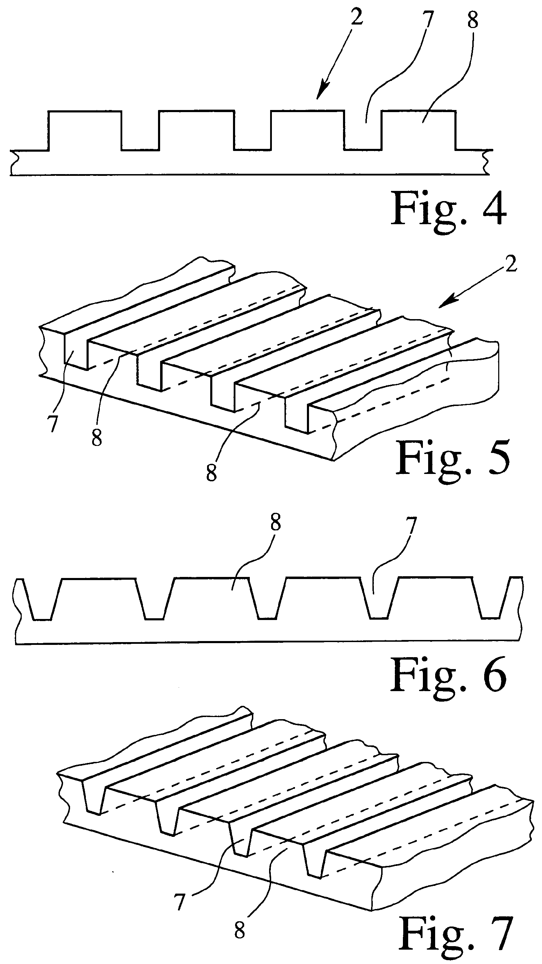

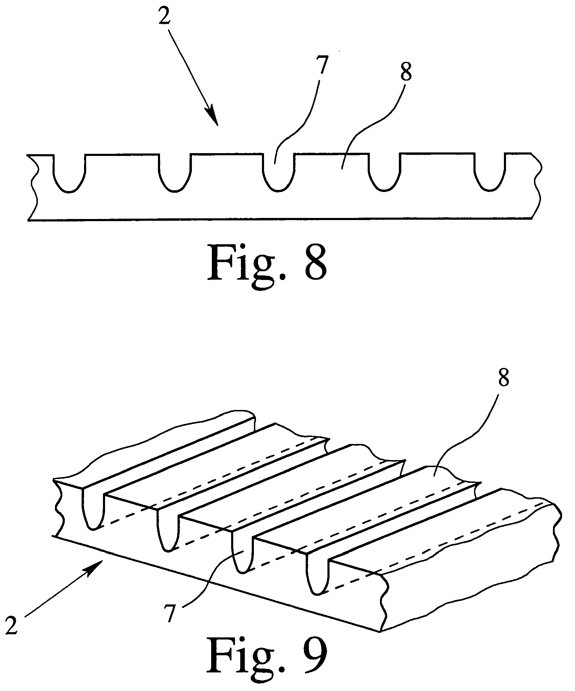

In den Fig. 4 bis 9 sind unterschiedliche Formen der Kanalstruktur bzw. der Kanäle und der Stege 8 dargestellt. In den Fig. 4 und 5 sind rechteckige Kanäle gezeigt, die parallel zueinander verlaufen. In den Fig. 6 und 7 sind V-förmige Kanäle gezeigt, während in den Fig. 8 und 9 U-förmige Kanäle und entsprechend ausgebildete Stege 8 dargestellt sind. Die einzelnen Kanäle verlaufen dabei jeweils parallel zueinander, was grundsätzlich natürlich nicht erforderlich ist. Bei Verwendung von Deckschichten 2, die wie in den Fig. 4 bis 9 ausgebildet sind, ist die zweite Deckschicht 3 entsprechend auszubilden, wobei dann ein Kreuzen der jeweiligen Kanäle erforderlich ist.

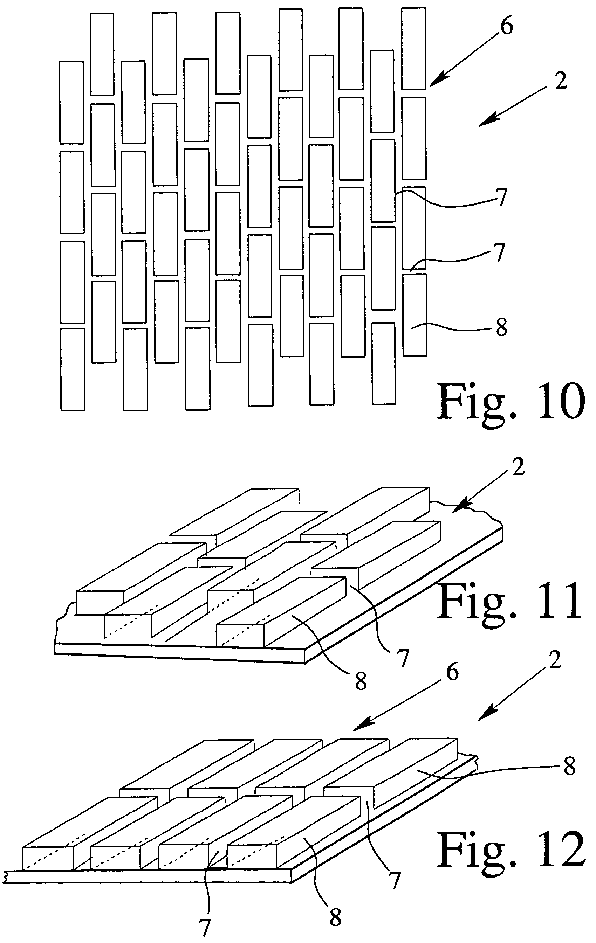

In den Fig. 10 bis 12 ist jeweils eine Deckschicht 2 dargestellt, bei der eine Kanalstruktur mit gekreuzten Kanälen vorgesehen ist. Die Kanalstruktur 6 weist jeweils eine Kachelstruktur auf. Die einzelnen Kacheln ergeben sich durch Kanäle, die die Stege 8 unterbrechen. Bei den Kacheln handelt es sich also um Stegabschnitte. Dabei ist es bei den Ausführungsformen der Fig. 10 und 11 so, daß die Kacheln versetzt zueinander angeordnet sind, während in Fig. 12 eine gleichmäßige, nicht versetzte Anordnung vorgesehen ist. Die einzelnen Kacheln haben dabei eine Breite zwischen 5 und 400 µm und eine Länge zwischen 10 und 1000 µm. Die Kanalbreite B beträgt sowohl bei den längslaufenden als auch bei den querlaufenden Kanalstellen 12 jeweils weniger als 150 µm.

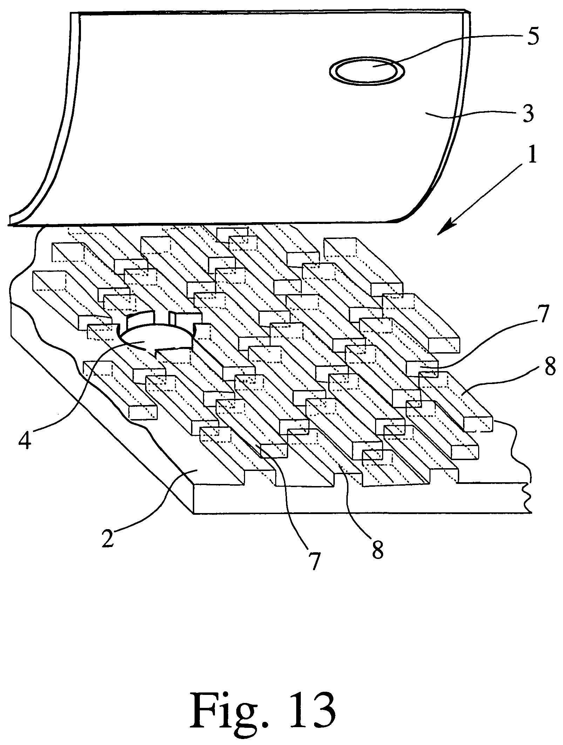

In Fig. 13 ist eine Ausführungsform dargestellt, bei der eine Deckschicht 2 verwendet wird, wie sie in Fig. 10 mit versetzter Kachelstruktur gezeigt ist. Die Deckschicht 2 weist eine Vielzahl von Perforationen 4 auf, von denen lediglich eine dargestellt ist. Die obere Deckschicht 3 ist unstrukturiert und weist eine Vielzahl von Perforationen 5 auf, von denen lediglich eine dargestellt ist.

Die in Fig. 14 dargestellte Ausführungsform unterscheidet sich von der in Fig. 13 dargestellten dadurch, daß die obere Deckschicht 3 keine Rundlöcher als Perforationen 5, sondern Schlitze aufweist. Es versteht sich, daß grundsätzlich auch die untere Deckschicht 2 statt der Rundlöcher oder ergänzend zu Rundlöchern Schlitze aufweisen kann.

In Fig. 15 ist eine Ausführungsform eines Laminats 1 zur Verwendung im Baubereich dargestellt, bei dem sich zwischen der ersten Deckschicht 2 und der zweiten Deckschicht 3 eine Struktur 6 aus Schaum befindet. Der Schaum weist offene Poren 7 mit den vorgenannten Abmaßen auf. Da der Schaum nach oben und nach unten hin über die Deckschichten 2, 3 geschlossen ist (Ausnahmen stellen hier lediglich die Perforationen 4, 5 dar), ergibt sich eine Porosität quer zum Schichtaufbau bzw. in der Ebene des Laminats 1.

In Fig. 15 ist eine andere Ausführungsform dargestellt, bei der die Struktur 6 als Funktionsebene durch eine verstreckte hochgefüllte Folie gebildet wird, die aufgrund der Verstreckung elliptische Poren, die miteinander kommunizieren, aufweist. Auch hierbei ergibt sich die Porosität in der Ebene des Laminats 1 und damit quer zum Schichtaufbau.

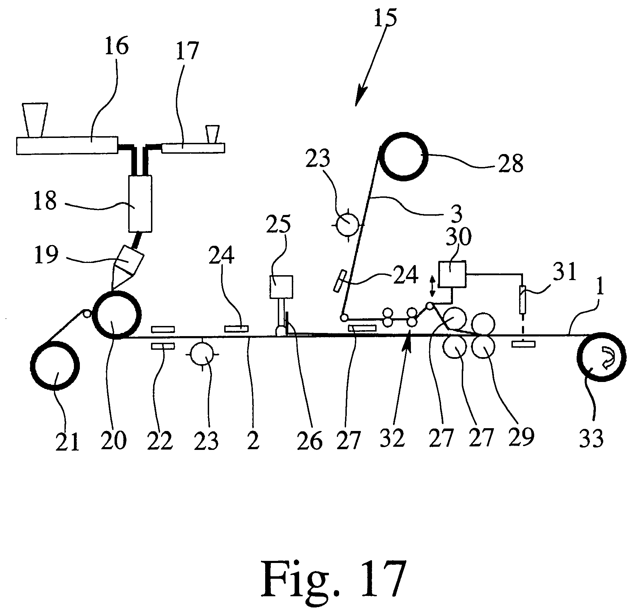

Das Laminat 1 läßt sich auf unterschiedliche Arten herstellen. In Fig. 17 ist eine Vorrichtung 15 dargestellt, mit der ein Laminat 1 zur Verwendung im Baubereich herstellbar ist. Hierbei wird eine erste Deckschicht 2 dadurch hergestellt, daß Ausgangskunststoffe über einen Hauptextruder 16 und einen Nebenextruder 17 einem CoEx-Block 18 zugeführt werden. Das Kunststoffmaterial wird dann über eine Düse 19 einer unstrukturierten Gießwalze 20 zugeführt. Der Gießwalze 20 ist vorliegend ein Abwickler 21 zugeordnet, der zum Zulauf einer weiteren Schicht, beispielsweise einer Verstärkung dienen kann. Es wird allerdings darauf hingewiesen, daß der Abwickler 20 nicht unbedingt erforderlich ist. An die Gießwalze 20 schließt sich eine Dickenmeßeinrichtung 22 an, an die sich wiederum eine Perforationseinrichtung 23 anschließt. Hierüber werden dann Perforationen 4 in die Deckschicht 2 eingebracht. Im Anschluß an die Perforationseinrichtung 23 ist eine Aktivierungseinrichtung 24 vorgesehen. Hierbei kann es sich um eine Corona- oder Plasma-Aktivierung oder aber auch um die Aufbringung eines Primers handeln. In Herstellungsrichtung hinter der Aktivierungseinrichtung 24 befindet sich ein Schäumer 25, in dem beispielsweise eine Dispersion eines Acrylatharzes mit Amoniumstearat versetzt und mit Luft aufgeschäumt wird, so daß sich beispielsweise eine Schaumdichte zwischen 300 und 400 g/l ergibt. Der so erhaltene Schaum wird dann auf die aktivierte Seite der Deckschicht 2 mittels eines Rakels 26 aufgebracht.

Im dargestellten Ausführungsbeispiel wird der Acrylatschaum mit 30 bis 50 g/m² auf die Deckschicht 2 aufgebracht und bei einer Temperatur zwischen 70° und 100° über einen vorgegebenen Zeitraum, beispielsweise zwischen 10 und 30 Sekunden vorgetrocknet. Hierzu können eine oder mehrere Vorwärmeinrichtungen 27 handeln, wobei es sich um IR-Strahler, Heißluftstrahler und/oder beheizte Walzen handeln kann.

Der Schicht 2, auf der sich der Schaum befindet, wird von oben her über einen Abwickler 28 eine weitere Deckschicht 3 zugeführt, die über eine Perforationseinrichtung 23 perforiert und über eine Aktivierungseinrichtung 24 oberflächenaktiviert wird. Anschließend werden die beiden Deckschichten 2, 3 über einen Kalander 29 laminiert, wobei auf einen Kleber verzichtet werden kann, da der Schaum selbst den Kleber bildet.

Zur Erzielung einer gezielten Versetzen der Perforationen 4, 5 in den jeweiligen Deckenschichten 2, 3 dient eine Steuereinrichtung 30, mit der einerseits nach dem Kalander 29 eine Meßeinrichtung 31, beispielsweise in Form einer HR Kamera, und andererseits eine Stelleinrichtung 32 gekoppelt sind. Über die Stelleinrichtung 32 läßt sich die Zuführung der Deckschicht 3 derart verzögern, daß sich eine Versetzung der einzelnen Perforationen 4, 5 in den Deckschichten 2, 3 ergibt. Hinzuweisen ist darauf, daß es grundsätzlich auch möglich ist, die Versetzung der Perforationen über die Abwickeleinrichtung 28 zu erzielen. Schließlich wird das fertige Laminat 1 auf einem Aufwickler 33 aufgewickelt.

Bei einem konkreten Ausführungsbeispiel eines Laminats 1 zur Verwendung im Baubereich mit einer geschäumten Funktionsebene wird eine Flachfolie aus 12 g/m² PET hergestellt, insbesondere extrudiert. Anschließend erfolgt eine Heißnadelperforation mit 40 Perforationen pro cm². Die Perforationen haben einen Durchmesser von ca. 80 µm. Eine Dispersion eines Acrylatharzes wird mit Amoniumstearat versetzt und mit Luft in einem Schlagluftmischer aufgeschäumt, so daß eine Schaumdichte von 350 g/l entsteht. Die eine Deckschicht 2 wird nach einer Corona-Vorbehandlung mit 40 g/m² des Acrylatschaums beschichtet und 20 Sekunden bei 85°C vorgetrocknet. Die zweite Coronavorbehandelte Deckschicht 3 wird daraufhin zugeführt und der Verbund wird mittels eines Kalanders bei 80°C und 500 N/cm gebildet. Anschließend erfolgt bei 115°C eine Fixierung für 40 Sekunden. Dabei verbleiben dann 23 g/m² Trockengewicht des Schaums. Das Laminat hat eine Dichtigkeit bei einer Wassersäule von 830 cm und eine Wasserdampfdurchlässigkeit von 340 g/m² x d.

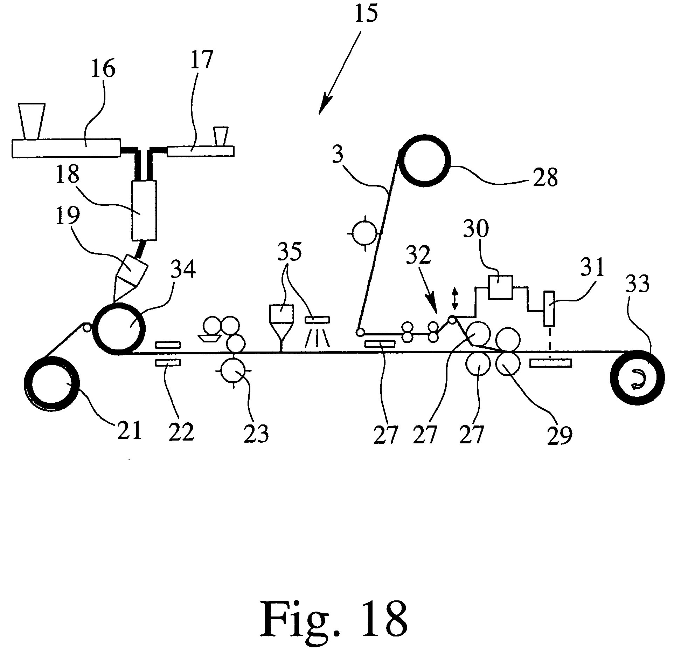

In Fig. 18 ist eine Vorrichtung 15 dargestellt, die der Vorrichtung 15 gemäß Fig. 17 zumindest teilweise ähnelt. Hierbei wird die Struktur 6 allerdings nicht durch eine separate Schicht erzeugt, sondern befindet sich auf der Deckschicht 2 selbst, nämlich dadurch, daß statt einer unstrukturierten Gießwalze 20 eine strukturierte Gießwalze 34 verwendet wird, wobei die Folie hierbei auf die strukturierte Gießwalze 34 extrudiert wird, so daß sich die Mikrostruktur der Gießwalze 34 in der Folie abbildet. Da es an der geschäumten Struktur 6 fehlt, entfällt der Schäumer 25. Statt dessen ist eine Klebauftragseinrichtung 35 vorgesehen, wobei der Klebeauftrag über eine Düse oder über Sprühen erfolgen kann. Ansonsten entspricht die Vorrichtung 15, insbesondere was die Deckschicht 3 betrifft, der zuvor beschriebenen Ausführungsform. Wesentlich ist hierbei, daß durch die speziell mikrostrukturierte Gießwalze 34 deren Mikrostruktur im Schmelzefilm als Kanalstruktur abgebildet und durch Abkühlen der Folie fixiert wird. In einem weiteren Schritt wird die Deckschicht dann perforiert und anschließend mit einer in gleicher Weise hergestellten zweiten Deckschicht mittels Kleber laminiert. Die zweite Deckschicht 3 ist zuvor entsprechend über eine strukturierte Gießwalze hergestellt und aufgewickelt worden. Die Zusammenführung der beiden Deckschichten erfolgt derart, daß sich dabei dann eine Kanalstruktur mit gekreuzten Kanälen ergibt.

In einer konkreten Ausführungsform wird in einem ersten Arbeitsgang eine Folie aus 15 g/m2 PP-Homopolymer und 3 g/m2 PP-Randomcopolymer auf die strukturierte Gießwalze 34 coextrudiert. Dabei wird folgende um 35° gegen die Laufrichtung der Folie verschobene Kanalstruktur abgeformt: Kanalbreite: 7 µm, Kanaltiefe 5 µm, Stegbreite 17µm. Nach der Strukturierung erfolgt eine Perforation durch Stanzen von Löchern mit einem Durchmesser von 500 µm und einer Lochdichte von 2/cm². Im zweiten Arbeitsgang wird der gleiche Vorgang wiederholt. Nach der Perforation läuft der erste Arbeitsgang in der Art zu, daß die Kanalstrukturen einander zugewandt in einem Winkel von 70° gekreuzt zu liegen kommen. Vor dem Kontakt der beiden Oberflächen erfolgt eine Vorwärmung mittels eines Infrarotstrahlers. Der Verbund wird durch ein Kalanderwalzenpaar hergestellt und beim Abkühlen des Laminats fixiert. Eine hochauflösende Kamera erfaßt den Versatz der Perforationen und steuert über zwei Zugwalzenpaare und eine Kantensteuerung die relative Lage der Perforationen zueinander. An dem Laminat 1 wird eine Wassersäule von mehr als 150 cm und eine WDD von 225 g/m² x d gemessen.

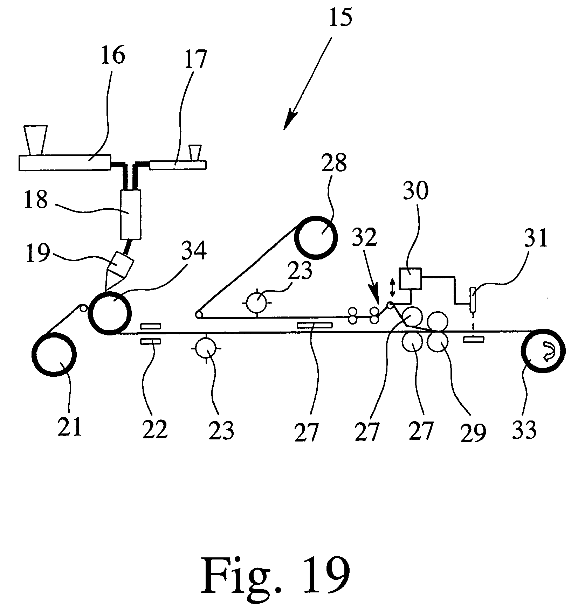

Die Fig. 19 zeigt eine Vorrichtung 15, die im wesentlichen der Vorrichtung 15 aus Fig. 18 entspricht. Ein Unterschied besteht lediglich darin, daß die Laminierung nicht mittels Kleber sondern thermisch erfolgt. Dementsprechend fehlt die Klebauftragseinrichtung.

In einer weiteren konkreten Ausführungsform wird in einem ersten Arbeitsgang ein PET-Spinnvlies von 20 g/m² mit einer CoEx-Folie aus 20 g/m² PET und 2 g/m² PBT auf einer unstrukturierten Gießwalze extrusionsbeschichtet. Die Beschichtung findet auf der PET-Seite der Folie statt. Im Anschluß erfolgt eine Heißperforation mit ca. 80 µm Lochdurchmesser und einer Lochdichte von ca. 20/cm².

Im zweiten Arbeitsgang wird eine Folie aus 20 g/m² PET unter Zulauf eines PET-Spinnvlieses von 20 g/m² auf eine strukturierte Gießwalze extrudiert. Dabei wird folgende Kanalstruktur abgebildet: Kanalbreite: 10 µm, Kanaltiefe 10µm, Stegbreite 20µm. Die Stege der Gießwalze sind durch Strahlgut so aufgerauht, daß sich in der abgeformten Folie auf dem Boden der Kanäle Noppen in der Dimension von 800 nm befinden. Dieses Vorlaminat wird im Anschluß mit ca. 80 µm Lochdurchmesser und einer Lochdichte von ca. 20/cm² heißperforiert. Im weiteren läuft die unstrukturierte Schicht zu und beide Schichten werden mit Walzen vorgewärmt. Die PBT-Siegelschicht des ersten Arbeitsganges erfährt noch eine Vorheizung mittels eines Infrarotstrahlers, bevor die Schichten mittels eines Kalanders so verbunden werden, daß Siegelschicht und Struktur zueinander zeigen. Die Anordnung der Perforation wird wie im vorigen Beispiel gesteuert. An dem Laminat 1 des Aufbaus Vlies-Schicht- Schicht-Vlies wird eine Wassersäule von 70 cm und eine WDD von 570 g/m² x d gemessen.

Bei einem alternativen Herstellungsverfahren wird in einen bereits perforierten thermoplastischen Polyolefinfilm mittels einer mikrostrukturierten Prägewalze in einem Heißprägeprozeß eine Kanal- oder gekreuzte Kanalstruktur eingebracht. Hierbei wird die Deckschicht dann bis an den Schmelzbereich erwärmt und mit der entsprechend strukturierten Walze abgeprägt. Beim Abkühlen der Deckschicht bleibt die Kanalstruktur dann in der Folie erhalten, wobei es hierbei unerheblich ist, ob die Folie bzw. Deckschicht bereits perforiert ist oder dieser Schritt erst anschließend erfolgt.

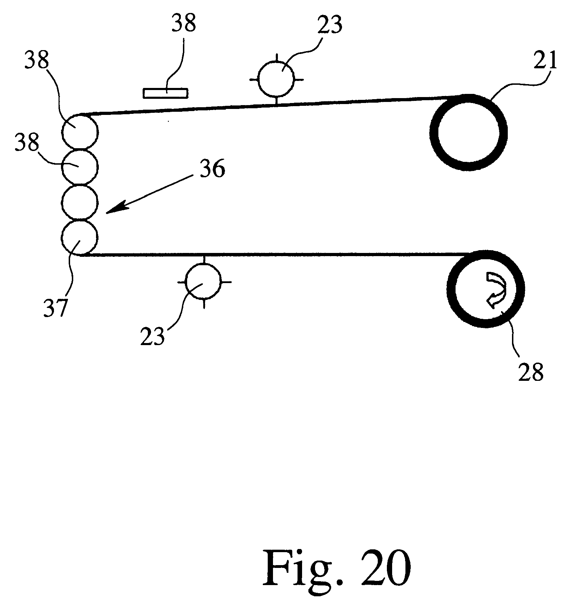

Die Herstellung einer geprägten Folie oder Deckschicht ist in Fig. 20 schematisch dargestellt. Eine unstrukturierte Flachfolie wird von einem Abwickler 21 abgewickelt. Es kann dann über eine Perforationseinrichtung 23 ein Perforieren erfolgen. Dies kann allerdings auch erst zu einem späteren Zeitpunkt erfolgen. Die Folie wird einem Kalander 36 zugeführt, der eine strukturierte Prägewalze 37 aufweist. Dem Kalander 36 vorgeschaltet sind Mittel 38 zur Vorwärmung. Hierbei kann es sich um beheizte Walzen und/oder Heizeinrichtung, wie IR-Strahler oder Heißluftstrahler handeln. An die Prägewalze 37 kann sich, wie zuvor erwähnt, eine Perforationseinrichtung 23 anschließen, während die auf diese Weise hergestellte Deckschicht dann auf einen Aufwickler 28 aufgewickelt wird.

Nach Herstellen der beiden Deckschichten 2, 3 werden diese durch Laminierung miteinander verbunden, wobei sich letztlich eine gekreuzte Kanalstruktur mit versetzten Perforationen 4, 5 ergibt, um den gewünschten Aufbau einer diffusionsoffenen und gleichzeitig bis zu einem bestimmten hydrostatischen Druck dichten Folie zu erhalten. Wichtig ist, daß durch die Laminierung ein vollständiger Verbund der beiden Deckschichten 2, 3 über die alle Steg-Steg-Kreuzungspunkte bzw. an den Verbindungsstellen 14 entsteht, da fehlende Verbindungen zu Undichtigkeiten führen können. Vor dem Laminieren ist darauf zu achten, daß die beiden Deckschichten derart ausgebildet und versetzt zueinander angeordnet sind, daß die Anzahl der Kanalstellen zwischen zwei Perforationen 4, 5 in den beiden Deckschichtebenen mindestens 1, vorzugsweise 3 und insbesondere 5 betragen sollte.

Die Folie bzw. Deckschicht 2 wird dann durch ein Walzenauftragsverfahren mit einem sehr dünnen Film eines lösungsmittelhaltigen oder -freien Ein- oder Zweikomponentenklebersystems versehen und anschließend mit einer zweiten perforierten Deckschicht 3 derart kaschiert, daß die Perforationen in beiden Schichtebenen nicht deckungsgleich sind. Im Fall der Kanalstrukturen in beiden Deckschichten 2, 3 ist wichtig, daß sich die Kanäle der beiden Folien 2, 3 überkreuzen, wobei der Winkel letztlich eine untergeordnete Rolle spielt. Im Falle einer Deckschicht 2 mit einer gekreuzten Kanalstruktur kann die Deckschicht 3 glatt bzw. unstrukturiert sein, wie dies beispielsweise in den Fig. 13 und 14 dargestellt ist. In diesem Falle bietet es sich an, die glatte Deckschicht 3 mit einem Klebefilm auszurüsten und die strukturierte Deckschicht 2 aufzukaschieren. Für eine verbesserte Benetzung der Deckschichten 2, 3 mit dem Kleber ist eine Corona-Vorbehandlung ratsam.

Bei einem weiteren Anwendungsbeispiel ist vorgesehen, daß mittels Extrusion ein thermoplastischer Polyolefin-Film hergestellt wird, der durch eine entsprechend strukturierte Gießwalze eine Kanalstruktur aus Mikrokanälen oder gekreuzten Mikrokanälen erhält. Im weiteren Prozeß wird die Deckschicht 2 zusammen mit einer zweiten Deckschicht 3 über eine mit kleinen Messern versehene Walze geführt, wobei beide Deckschichten gleichzeitig mit Perforationen in Form kleiner Schlitze versehen werden. Nach einer geringen lateralen Versetzung der beiden Deckschichten 2, 3 zueinander werden diese thermisch miteinander laminiert. Die Länge dieser Schlitze kann dabei im Bereich zwischen 0,5 mm und 2 mm liegen, wobei der Abstand der Schlitze zueinander im gleichen Bereich liegt. Die laterale Versetzung der Schlitze im Verbund ist so gewählt, daß kein Schlitz in der Deckschicht 2 direkten Kontakt bzw. eine auch nur teilweise Überdeckung mit einem Schlitz in der Deckschicht 3 hat und zwischen den Schlitzen mindestens eine, vorzugsweise drei und insbesondere fünf Kanalstellenliegen.

Bei einem weiteren Anwendungsbeispiel für die Strukturgebung in der funktionellen Deckschicht wird eine Faserzwischenlage verwendet, die direkt im Extrusionsprozeß durch Zulaufenlassen von Fasern oder Fasergelegen erzeugt wird, wobei die Abmessungen der Fasern so sind, daß sich der eingangs genannte Querschnitt A ergibt. Durch das Einlaufenlassen in den Schmelzefilm werden diese Fasern fest in die Trägerfolie bzw. -schicht eingebunden. Wählt man das Fasermaterial entsprechend (z. B. BiCo-Fasern), kann bei einer thermischen Laminierung gezielt nur der Mantel der Fasern angeschmolzen werden, was zur Erhaltung der relevanten Strukturdimensionen führt.

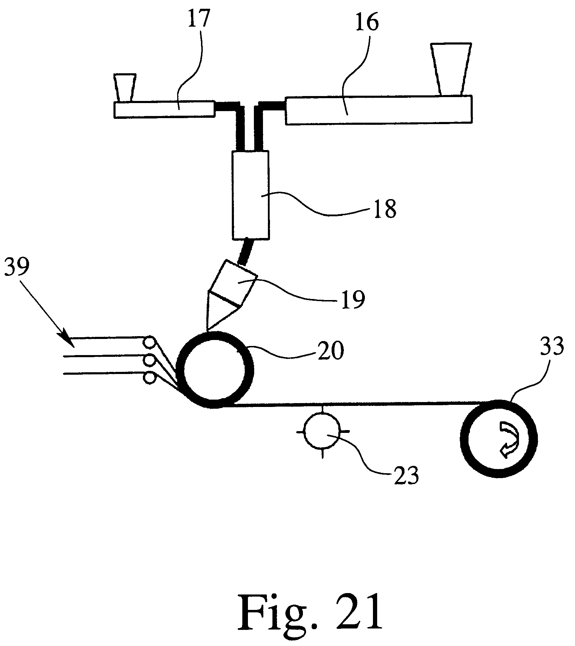

Ein Ausführungsbeispiel einer Vorrichtung zur Herstellung einer diesbezüglichen Deckschicht ist in Fig. 21 dargestellt. Dabei wird auf eine unstrukturierte Gießwalze 20 eine Folie coextrudiert. Gleichzeitig wird Fasermaterial 39 zugeführt, das in den Schmelzefilm eingebunden wird. Die Folie wird dann über die Perforationseinrichtung 23 perforiert und anschließend auf dem Aufwickler 33 aufgewickelt.

Weiterhin können die Strukturen auch auf glatte Folien, wie z. B. durch das sogenannte "reel-to-reel"-Verfahren aufgedruckt oder über Sprühauftrag von Klebern oder ähnlichem aufgebracht werden. Wichtig ist hierbei, daß die aufgedruckten oder -gesprühten Strukturen die vorgenannten Dimensionen bezüglich der Stege und Kanäle und insbesondere des Querschnitts A erzeugen. Bei der Verwendung von Klebern in den entsprechenden Dimensionen kann so der strukturgebende Prozeß und die Laminierung in einem Schritt durchgeführt werden.

### Bezugszeichenliste:

- 1: Laminat
- 2: Deckschicht
- 3: Deckschicht
- 4: Perforation
- 5: Perforation
- 6: Kanalstruktur
- 7: Poren
- 8: Steg
- 9: Kanalboden
- 10: Seitenfläche
- 11: Oberseite
- 12: Kanalstelle
- 13: Durchgangsstelle
- 14: Verbindungsstelle
- 15: Vorrichtung
- 16: Hauptextruder
- 17: Nebenextruder
- 18: CoEx-Block
- 19: Düse
- 20: Gießwalze
- 21: Abwickler
- 22: Dickenmeßeinrichtung
- 23: Perforationseinrichtung
- 24: Aktivierungseinrichtung
- 25: Schäumer
- 26: Rakel
- 27: Vorwärmeinrichtung
- 28: Abwickler
- 29: Kalander
- 30: Steuereinrichtung
- 31: Meßeinrichtung
- 32: Stelleinrichtung
- 33: Aufwickler
- 34: Gießwalze
- 35: Klebauftragseinrichtung
- 36: Kalander
- 37: Prägewalze
- 38: Vorwärmmittel
- 39: Fasermaterial

- A: Querschnitt
- B: Breite
- b: Breite
- T: Tiefe

## Patentansprüche

1. Verwendung eines dampfdurchlässigen Laminats (1) im Baubereich, mit wenigstens einer ersten Deckschicht (2) und wenigstens einer zweiten Deckschicht (3), wobei die Deckschichten (2, 3) Perforationen (4, 5) aufweisen und derart miteinander verbunden sind, daß sich die Perforationen (4, 5) der ersten Deckschicht (2) nicht mit den Perforationen (5) der zweiten Deckschicht (3) überdecken, wobei zwischen den Deckschichten (2, 3) eine Poren (7) aufweisende Struktur (6) vorgesehen ist, und wobei die Poren (7) jeweils eine lichte Querschnittsfläche (A) von kleiner 100 µm² aufweisen.

2. Verwendung eines Laminats nach Anspruch 1, **dadurch gekennzeichnet, daß** die Struktur (6) von einem Schaum, von wenigstens einer porösen Folie, durch eine an wenigstens einer Deckschicht (2, 3) ausgebildeten Kanalstruktur, durch Fasern oder durch strukturierten Kleber gebildet wird.

3. Verwendung eines Laminats nach Anspruch 2, **dadurch gekennzeichnet, daß** die poröse Folie aus einer gefüllten, verstreckten Folie hergestellt ist.

4. Verwendung eines Laminats nach einem der vorhergehenden Ansprüche, **dadurch gekennzeichnet, daß** die Struktur (6) als an wenigstens einer Deckschicht (2, 3) vorgesehene Kanalstruktur ausgebildet ist, wobei die Poren (7) als durch seitliche Stege (8) begrenzte Kanäle ausgebildet sind.

5. Verwendung eines Laminats nach Anspruch 4, **dadurch gekennzeichnet, daß** das Breiten-/Tiefen-Verhältnis des Kanals zwischen 10:1 bis 1:10, vorzugsweise zwischen 5:1 bis 1:5 und insbesondere 2:1 bis 1:2 liegt.

6. Verwendung eines Laminats nach einem der vorhergehenden Ansprüche, **dadurch gekennzeichnet, daß** eine Deckschicht (2) eine Kanalstruktur mit gekreuzten Kanälen aufweist, wobei sich die Kanäle in einem Winkel zwischen 5° und 175° kreuzen.

7. Verwendung eines Laminats nach Anspruch 6, **dadurch gekennzeichnet, dass** die andere Deckschicht (3) unstrukturiert ist, wobei sich Kanalstellen und Verbindungsstellen ergeben, wobei sich eine Kanalstelle (12) an einem Kreuzungspunkt zwischen einem Kanal der einen Deckschicht (2) und der anderen Deckschicht (3) ergibt und wobei sich eine Verbindungsstelle (14) an einem Kreuzungspunkt zwischen einem Steg (8) der einen Deckschicht (2) und der anderen Deckschicht (3) ergibt.

8. Verwendung eines Laminats nach Anspruch 6 oder 7, **dadurch gekennzeichnet, daß** die Kanäle erhabene Substrukturen aufweisen und daß die Dimensionen der Substrukturen maximal 1/5, insbesondere maximal 1/10 der kleinsten Kanaldimensionen betragen.

9. Verwendung eines Laminats nach einem der Ansprüche 6 bis 8, **dadurch gekennzeichnet, daß** die unstrukturierte Deckschicht (3) an ihrer der strukturierten Deckschicht (2) zugewandten Seite ein Klebmittel aufweist.

10. Verwendung eines Laminats nach einem der Ansprüche 1 bis 9, **dadurch gekennzeichnet, dass** eine Deckschicht (2) mit Poren (7) aufweisendem Schaum beschichtet und auf den Schaum eine weitere Deckschicht (3) aufgebracht wird.

11. Verwendung eines Laminats nach einem der Ansprüche 1 bis 9, **dadurch gekennzeichnet, dass** eine Poren (7) aufweisende Folie zwischen zwei äußeren Deckschichten (2, 3) laminiert wird.

12. Verwendung eines Laminats nach einem der Ansprüche 1 bis 9, **dadurch gekennzeichnet, dass** ein Schmelzefilm zur Herstellung einer Deckschicht (2) auf wenigstens eine mikrostrukturierte Gießwalze (34) extrudiert und die Mikrostruktur der Gießwalze (34) im Schmelzefilm als Kanalstruktur abgebildet wird und wobei die Deckschicht mit wenigstens einer weiteren Deckschicht (3) laminiert wird.

13. Verwendung nach einem der Ansprüche 4 bis 12, **dadurch gekennzeichnet, daß** das Klebmittel lediglich auf die Oberseiten (11) der Stege (8) aufgebracht wird.

14. Verwendung nach einem der Ansprüche 1 bis 9, **dadurch gekennzeichnet, dass** eine unstrukturierte Deckschicht mit einer weiteren unstrukturierten Deckschicht mittels eines Klebmittels laminiert wird, wobei das Klebmittel als Kanalstruktur mit Stegen und dazwischenliegenden Kanälen auf wenigstens eine Deckschicht aufgebracht und insbesondere aufgedruckt wird und daß die Kanalstruktur nach dem Laminieren der Deckschichten zumindest im wesentlichen erhalten bleibt.

15. Verwendung nach einem der Ansprüche 1 bis 9, **dadurch gekennzeichnet, dass** ein Schmelzefilm zur Herstellung einer unstrukturierten Deckschicht extrudiert und Fasermaterial zur Erzeugung einer Kanalstruktur mit Stegen und dazwischenliegenden Kanälen dem Schmelzefilm zugeführt und darin eingebunden wird und wobei die Deckschicht mit dem eingebundenen Fasermaterial mit wenigstens einer weiteren, insbesondere ebenfalls unstrukturierten Deckschicht laminiert wird.

## Claims

1. Use of a vapor-permeable laminate (1) in the construction sector, having at least one first top layer (2) and at least one second top layer (3), wherein the top layers (2, 3) have perforations (4, 5) and are connected to one another such that the perforations (4, 5) of the first top layer (2) do not overlap the perforations (5) of the second top layer (3), wherein a structure (6) having pores (7) is provided between the top layers (2, 3), and wherein the pores (7) in each case have a clear cross-sectional area (A) of less than 100 µm².

2. Use of a laminate according to Claim 1, **characterized in that** the structure (6) of a foam, of at least one porous film, is formed by a channel structure formed on at least one top layer (2, 3), by fibers or by structured adhesives.

3. Use of a laminate according to Claim 2, **characterized in that** the porous film is produced from a filled, stretched film.

4. Use of a laminate according to one of the preceding claims, **characterized in that** the structure (6) is designed as a channel structure provided on at least one top layer (2, 3), wherein the pores (7) are designed as channels limited by lateral webs (8).

5. Use of a laminate according to Claim 4, **characterized in that** the width-/depth-ratio of the channel is between 10:1 to 1:10, preferably between 5:1 to 1:5 and in particular 2:1 to 1:2.

6. Use of a laminate according to one of the preceding claims, **characterized in that** one top layer (2) has a channel structure with crossed channels, wherein the channels cross at an angle between 5° and 175°.

7. Use of a laminate according to Claim 6, **characterized in that** the other top layer (3) is unstructured, wherein channel points and connecting points arise, wherein a channel point (12) arises at an intersection point between a channel of one top layer (2) and the other top layer (3) and wherein a connecting point (14) arises at an intersection point between a web (8) of the one top layer (2) and the other top layer (3).

8. Use of a laminate according to Claim 6 or 7, **characterized in that** the channels have raised substructures and that the dimensions of the substructures are maximally 1/5, in particular maximally 1/10 of the smallest channel dimensions.

9. Use of a laminate according to any one of Claims 6 to 8, **characterized in that** the unstructured top layer (3) has an adhesive on its side facing the structured top layer (2).

10. Use of a laminate according to any one of Claims 1 to 9, **characterized in that** a top layer (2) is coated with foam having pores (7) and a further top layer (3) is applied to the foam.

11. Use of a laminate according to any ane of Claims 1 to 9, **characterized in that** a film having pores (7) is laminated between two outer top layers (2, 3).

12. Use of a laminate according of any one of Claims 1 to 9, **characterized in that** a melted film is extruded for the production of a top layer (2) on at least one micro-structured casting roller (34) and the microstructure of the casting roller (34) is imaged in the melted film as a channel structure and wherein the top layer is laminated with at least one further top layer (3).

13. Use according to any one of Claims 4 to 12, **characterized in that** adhesive is only applied to the upper sides (11) of the webs (8).

14. Use according to any one of Claims 1 to 9, **characterized in that** an unstructured top layer is laminated with a further unstructured top layer by means of an adhesive, wherein the adhesive is applied and in particular imprinted as a channel structure with webs and channels lying in-between to at least one top layer and that the channel structure remains at least substantially after the lamination of the top layers.

15. Use according to any one of claims 1 to 9, **characterized in that** a melted film is extruded for the production of an unstructured top layer and fiber material for the generation of a channel structure with webs and channels lying in-between is fed to the melted film and is integrated therein and wherein the top layer with the integrated fiber material is laminated with at least one further, particularly also unstructured top layer.

## Revendications

1. Utilisation d'un stratifié (1) perméable à la vapeur dans le secteur de la construction, avec au moins une première couche de couverture (2) et au moins une deuxième couche de couverture (3), les couches de couverture (2, 3) présentant des perforations (4, 5) et étant raccordées l'une à l'autre de telle sorte que les perforations (4, 5) de la première couche de couverture (2) ne se chevauchent pas avec les perforations (5) de la deuxième couche de couverture (3), une structure (6) présentant des pores (7) étant prévue entre les couches de couverture (2, 3), et les pores (7) présentant respectivement une surface de section transversale libre (A) inférieure à 100 µm².

2. Utilisation d'un stratifié selon la revendication 1, **caractérisée en ce que** la structure (6) est formée d'une mousse, d'au moins une feuille poreuse, par une structure de canaux constituée sur au moins une couche de couverture (2, 3), par des fibres et ou par une colle structurée.

3. Utilisation d'un stratifié selon la revendication 2, **caractérisée en ce que** la feuille poreuse est fabriquée à partir d'une feuille remplie étirée.

4. Utilisation d'un stratifié selon l'une des revendications précédentes, **caractérisée en ce que** la structure (6) est constituée en tant que structure de canaux prévue sur au moins une couche de couverture (2, 3), les pores (7) étant constitués en tant que canaux limités par des nervures (8) latérales.

5. Utilisation d'un stratifié selon la revendications 4, **caractérisée en ce que** le rapport largeur/profondeur du canal est compris entre 10:1 et 1:10, de préférence entre 5:1 et 1:5 et en particulier entre 2:1 et 1:2.

6. Utilisation d'un stratifié selon l'une des revendications précédentes, **caractérisée en ce qu'**une couche de couverture (2) présente une structure de canaux avec des canaux croisés, les canaux de croisant en formant en angle entre 5° et 175°.

7. Utilisation d'un stratifié selon la revendication 6, **caractérisée en ce que** l'autre couche de couverture (3) est non structurée, d'où il résulte des emplacements de canaux et des emplacements de raccordements, un emplacement de canal (12) résultant sur un point de croisement entre un canal de la couche de couverture (2) et de l'autre couche de couverture (3), et un emplacement de raccordement (14) résultant sur un point de croisement entre une nervure (8) de la couche de couverture (2) et de l'autre couche de couverture (3).

8. Utilisation d'un stratifié selon la revendication 6 ou 7, **caractérisée en ce que** les canaux présentent des sous-structures en relief et **en ce que** les dimensions des sous-structures représentent au maximum 1/5, en particulier au maximum 1/10 des plus petites dimensions de canaux.

9. Utilisation d'un stratifié selon l'une des revendications 6 à 8, **caractérisée en ce que** la couche de couverture (3) non structurée présente un agent adhésif sur son côté tourné vers la première couche de couverture (2) structurée,

10. Utilisation d'un stratifié selon l'une des revendications 1 à 9, **caractérisée en ce qu'**une couche de couverture (2) est revêtue de mousse présentant des pores (7) et **en ce qu'**une autre couche de couverture (3) est mise en place sur la mousse.

11. Utilisation d'un stratifié selon l'une des revendications 1 à 9, **caractérisée en ce qu'**une feuille présentant des pores (7) est stratifiée entre deux couches de couverture (2, 3) extérieures.

12. Utilisation d'un stratifié selon l'une des revendications 1 à 9, **caractérisée en ce qu'**un film fondu est, pour la fabrication d'une couche de couverture (2), extrudé sur au moins un cylindre de coulée (34) microstructuré, et la microstructure du cylindre de coulée (34) est reproduite dans le film fondu en tant que structure de canaux, et la couche de couverture étant stratifiée avec au moins une autre couche de couverture (3).

13. Utilisation d'un stratifié selon l'une des revendications 4 à 12, **caractérisée en ce que** l'agent adhésif n'est mis en place que sur les côtés supérieurs (11) des nervures (8).

14. Utilisation d'un stratifié selon l'une des revendications 1 à 9, **caractérisée en ce qu'**une couche de couverture non structurée est stratifiée avec une autre couche de couverture non structurée au moyen d'un agent adhésif, l'agent adhésif étant mis en place, et en particulier mis en place par impression, en tant que structure de canaux avec des nervures et des canaux intermédiaires sur au moins une couche de couverture, et **en ce que** la structure de canaux demeure préservée au moins pour l'essentiel après la stratification des couches de couverture.

15. utilisation d'un stratifié selon l'une des revendications 1 à 9, **caractérisée en ce qu'**un film fondu est extrudé pour la fabrication d'une couche de couverture non structurée, et **en ce qu'**un matériau fibreux est, pour la production d'une structure de canaux avec des nervures et des canaux intermédiaires, conduit au film fondu et y est intégré, et la couche de couverture avec le matériau fibreux intégré est stratifiée avec au moins une autre couche de couverture, en particulier également non structurée.
